# EUROPEAN PATENT APPLICATION

(11) **EP 4 768 316 A1**
(43) Date of publication of application: **01.07.2026**
(21) Application number: 25223991.8
(22) Date of filing: 16.12.2025
(51) Int. Cl.: B60L 53/16, B60L 53/302, B60L 58/26

(54) **LIQUID COOLING CHARGING CONNECTOR, LIQUID COOLING CONNECTOR, LIQUID COOLING DEVICE, AND ELECTRIC VEHICLE**

(30) Priority: 28.12.2024 CN 202423301000 U
(71) Applicant: Huawei Technologies Co., Ltd., Shenzhen, Guangdong 518129 (CN)
(72) Inventor: CHENG, Dong, Shenzhen 518129 (CN); XU, Zhen, Shenzhen 518129 (CN); HU, Minggui, Shenzhen 518129 (CN)
(74) Representative: Isarpatent

(57) **Abstract**

This application provides a liquid cooling charging connector, a liquid cooling connector, a liquid cooling device, and an electric vehicle. The liquid cooling charging connector is configured to connect to the electric vehicle. The liquid cooling charging connector includes a housing, a liquid cooling plug, and an electric plug. The housing includes a bottom plate, the bottom plate includes a plurality of jacks, and both the liquid cooling plug and the electric plug pass through the bottom plate through different jacks. The liquid cooling plug includes a liquid supply plug and a liquid return plug. The liquid supply plug is configured to transmit coolant of a liquid cooling unit to the electric vehicle, and the liquid return plug is configured to transmit, to the liquid cooling unit, the coolant output by the electric vehicle. The electric plug includes a connection confirm plug. The connection confirm plug is configured to connect to a connection confirm socket of the electric vehicle. The connection confirm plug is further configured to connect to a connection confirm circuit. A voltage at a detection point in the connection confirm circuit indicates a state of a connection between the liquid cooling charging connector and the electric vehicle. The bottom plate includes a plurality of spaced accommodation cavities, and the liquid cooling plug and the electric plug are located in different accommodation cavities.

## Description

### TECHNICAL FIELD

This application relates to the charging field, and in particular, to a liquid cooling charging connector, a liquid cooling connector, a liquid cooling device, and an electric vehicle.

### BACKGROUND

With development of technologies in the new energy field, electric vehicles are increasingly popularized. Currently, as users have increasingly high requirements on charging time of electric vehicles, charging piles output increasingly high charging power to direct current sockets. As the charging power increases, for example, in an ultra-fast charging scenario, a power battery generates more heat, effect of heat dissipation only via a thermal management system is limited, and a heat dissipation capability of the thermal management system cannot meet a heat dissipation requirement of the power battery during high-power charging.

### SUMMARY

This application provides a liquid cooling charging connector, a liquid cooling connector, a liquid cooling device, and an electric vehicle, to meet a heat dissipation requirement of a power battery during high-power charging.

According to a first aspect, a liquid cooling charging connector is provided. The liquid cooling charging connector is configured to connect to an electric vehicle, the liquid cooling charging connector includes a housing, a liquid cooling plug, and an electric plug, the housing includes a bottom plate, the bottom plate includes a plurality of jacks, and both the liquid cooling plug and the electric plug pass through the bottom plate through different jacks. The liquid cooling plug includes a liquid supply plug and a liquid return plug. The liquid supply plug is configured to transmit coolant of a liquid cooling unit to the electric vehicle, and the liquid return plug is configured to transmit, to the liquid cooling unit, the coolant output by the electric vehicle. The electric plug includes a connection confirm plug. The connection confirm plug is configured to connect to a connection confirm socket of the electric vehicle. The connection confirm plug is further configured to connect to a connection confirm circuit. A voltage at a detection point in the connection confirm circuit indicates a state of a connection between the liquid cooling charging connector and the electric vehicle. The bottom plate includes a plurality of spaced accommodation cavities, and the liquid cooling plug and the electric plug are located in different accommodation cavities.

In this embodiment of this application, when the electric vehicle is charged at high power, the coolant can be transmitted to the electric vehicle by using the liquid cooling charging connector, to assist a thermal management system on the vehicle in dissipating heat for a power battery of the vehicle. In this way, a liquid cooling device outside the vehicle improves a heat dissipation capability of a battery management system on the vehicle for the power battery of the vehicle, to meet a heat dissipation requirement for high-power charging of the power battery.

In addition, in this application, it is designed that the liquid cooling plug and the electric plug are located in the different accommodation cavities, to prevent the coolant flowing through the liquid cooling plug from flowing into the electric plug, so as to avoid a charging accident that may be caused by the coolant flowing into the electric plug. This improves safety of charging the electric vehicle and user experience.

With reference to the first aspect, in a possible design, a projection of the liquid cooling plug does not overlap a projection of the electric plug in a gravity direction.

In this embodiment of this application, because the projection of the liquid cooling plug does not overlap the projection of the electric plug in the gravity direction, even if a connection between the liquid cooling plug and the liquid cooling socket becomes loose, and a small amount of coolant drops downward in the gravity direction, the coolant does not flow into the electric plug. This can avoid a charging exception that may be caused by the coolant flowing into the electric plug, and ensure normal charging of the electric vehicle; and can even avoid a charging accident that may be caused by the coolant flowing into the electric plug, thereby improving safety of charging the electric vehicle.

In addition, in this design, when the liquid cooling charging connector is removed from the liquid cooling connector, even if a small amount of coolant drops from the liquid cooling plug of the liquid cooling charging connector, the small amount of coolant does not flow into the electric plug. This can avoid a personal injury to a user caused when the user accidentally touches the electric plug, to ensure safety of the user. In addition, this can also avoid a charging accident caused by the coolant in the electric plug when the liquid cooling charging connector is plugged into the liquid cooling connector again, thereby improving safety of charging the electric vehicle.

With reference to the first aspect, in a possible design, a distance between one end of the liquid cooling plug and the bottom plate is greater than a distance between one end of the connection confirm plug and the bottom plate, or a distance between one end of the liquid cooling plug and an end face that is of the accommodation cavity and that is away from the bottom plate is less than a distance between one end of the connection confirm plug and an end face that is of the accommodation cavity and that is away from the bottom plate. Both the one end of the liquid cooling plug and the one end of the connection confirm plug are exposed outside the housing.

Based on the foregoing solution, when the liquid cooling charging connector is plugged into the liquid cooling connector, the liquid cooling plug is preferably connected to the liquid cooling socket, and then the connection confirm plug is connected to the connection confirm socket. This can prevent the liquid cooling device from incorrectly determining the state of the connection between the liquid cooling plug and the liquid cooling socket, to avoid coolant leakage. This helps the liquid cooling device outside the vehicle normally dissipate heat for the power battery of the electric vehicle when a charging pile charges the electric vehicle at high power, to meet a heat dissipation requirement for high-power charging of the power battery.

With reference to the first aspect, in a possible design, the connection confirm plug includes a first connection confirm plug and a second connection confirm plug. A distance between one end of the first connection confirm plug and the bottom plate is less than a distance between one end of the second connection confirm plug and the bottom plate, or a distance between one end of the first connection confirm plug and the end face that is of the accommodation cavity and that is away from the bottom plate is greater than a distance between one end of the second connection confirm plug and the end face that is of the accommodation cavity and that is away from the bottom plate.

Based on the foregoing solution, in the process in which the liquid cooling charging connector is plugged into the liquid cooling connector, the second connection confirm socket is first connected to the second connection confirm plug, and then the first connection confirm plug is connected to the first connection confirm socket. It is equivalent to that the liquid cooling device finally confirms a complete connection between the liquid cooling socket and the liquid cooling plug. This can avoid a charging start delay caused when the electric vehicle finally confirms the complete connection between the liquid cooling socket and the liquid cooling plug, thereby shortening charging start duration, and improving charging start efficiency.

With reference to the first aspect, in a possible design, the electric plug further includes a communication plug, and the communication plug is configured to connect to a communication socket of the electric vehicle. A distance between one end of the communication plug and the bottom plate is greater than the distance between the one end of the first connection confirm plug and the bottom plate, and the distance between the one end of the communication plug and the bottom plate is less than the distance between the one end of the second connection confirm plug and the bottom plate; or a distance between one end of the communication plug and the end face that is of the accommodation cavity and that is away from the bottom plate is less than the distance between the one end of the first connection confirm plug and the end face that is of the accommodation cavity and that is away from the bottom plate, and the distance between the one end of the communication plug and the end face that is of the accommodation cavity and that is away from the bottom plate is greater than the distance between the one end of the second connection confirm plug and the end face that is of the accommodation cavity and that is away from the bottom plate. The one end of the communication plug is exposed outside the housing.

Based on the foregoing solution, in the process in which the liquid cooling charging connector is plugged into the liquid cooling connector, the second connection confirm plug is first connected to the second connection confirm socket, then the communication plug is connected to the communication socket, and finally the first connection confirm plug is connected to the first connection confirm socket. In this way, after the electric vehicle confirms the connection between the liquid cooling plug and the liquid cooling socket, the electric vehicle and the liquid cooling device may send packets to each other when the communication plug is connected to the communication socket. When the liquid cooling device confirms the connection between the liquid cooling socket and the liquid cooling plug, the liquid cooling device may transmit the coolant to the electric vehicle, to prepare for entering a charging phase. This can avoid a packet sending delay caused when the communication plug is connected to the communication socket after the connection confirm plug is connected to the connection confirm socket, thereby shortening the charging start duration, and improving the charging start efficiency.

In addition, in this embodiment of this application, the communication plug and the connection confirm plug are disposed in a same accommodation cavity, to reduce a quantity of accommodation cavities. This can simplify a design, and reduce processing complexity.

With reference to the first aspect, in a possible design, the electric plug further includes a ground plug, and the ground plug is configured to connect to a ground socket of the electric vehicle. A distance between one end of the ground plug and the bottom plate is less than the distance between the one end of the liquid cooling plug and the bottom plate, and the distance between the one end of the ground plug and the bottom plate is greater than the distance between the one end of the connection confirm plug and the bottom plate; or a distance between one end of the ground plug and the end face that is of the accommodation cavity and that is away from the bottom plate is greater than the distance between the one end of the liquid cooling plug and the end face that is of the accommodation cavity and that is away from the bottom plate, and the distance between the one end of the ground plug and the end face that is of the accommodation cavity and that is away from the bottom plate is less than the distance between the one end of the connection confirm plug and the end face that is of the accommodation cavity and that is away from the bottom plate. The one end of the ground plug is exposed outside the housing.

Based on the foregoing solution, in the process in which the liquid cooling charging connector is plugged into the liquid cooling connector, a connection between the ground plug and the ground socket lags behind the connection between the liquid cooling plug and the liquid cooling socket, and the connection between the ground plug and the ground socket is prior to the connection between the connection confirm plug and the connection confirm socket. This design helps the liquid cooling device accurately determine the state of the connection between the liquid cooling plug and the liquid cooling socket based on the connection confirm plug and the connection confirm socket, can improve accuracy of determining the state of the connection between the liquid cooling plug and the liquid cooling socket by the liquid cooling device, and can further ensure normal high-power charging of the electric vehicle.

With reference to the first aspect, in a possible design, the bottom plate further includes a guide post, the guide post and the accommodation cavity are located on a same side of the bottom plate, and the guide post is configured to plug into a guide hole of the electric vehicle. A distance between one end that is of the guide post and that is away from the bottom plate and the bottom plate is greater than the distance between the one end of the liquid cooling plug and the bottom plate, where the one end of the liquid cooling plug is exposed outside the housing.

Based on the foregoing solution, a connection between the guide post of the liquid cooling charging connector and the guide hole of the electric vehicle is prior to the connection between the liquid cooling plug and the liquid cooling socket. In other words, compared with another plug of the liquid cooling charging connector, the guide post of the liquid cooling charging connector is first connected to the guide hole of the liquid cooling connector. In this way, a position of the liquid cooling charging connector basically corresponds to a position of the liquid cooling connector. This helps the user accurately plug the liquid cooling charging connector into the liquid cooling connector.

With reference to the first aspect, in a possible design, the bottom plate further includes a guide groove or a guide hole, and the guide groove or the guide hole is configured to accommodate a guide post of the electric vehicle.

Based on the foregoing solution, the guide post of the electric vehicle is plugged into the guide groove or the guide hole of the liquid cooling charging connector, and a connection between the guide groove or the guide hole and the guide post of the electric vehicle is prior to the connection between the liquid cooling plug and the liquid cooling socket. This helps the user accurately plug the liquid cooling charging connector into the liquid cooling connector.

With reference to the first aspect, in a possible design, the bottom plate further includes a first protrusion structure, and the first protrusion structure and the accommodation cavity are located on a same side of the bottom plate. The first protrusion structure includes two oppositely disposed ends, one of the two ends of the first protrusion structure abuts against the bottom plate, the first protrusion structure further includes a through hole, the through hole penetrates the first protrusion structure in a direction in which the two ends of the first protrusion structure are arranged, and a side wall of the through hole and a part that is of the bottom plate and that corresponds to the first protrusion structure jointly enclose the guide groove.

Based on the foregoing solution, the side wall of the through hole and the part that is of the bottom plate and that corresponds to the first protrusion structure jointly enclose the guide groove. Therefore, a requirement on a thickness of the bottom plate of the liquid cooling charging connector is low. In other words, the bottom plate of the liquid cooling charging connector may be designed as a thin plate, to reduce weight of the liquid cooling charging connector. This helps the user insert the liquid cooling charging connector into the liquid cooling connector, thereby improving user experience.

With reference to the first aspect, in a possible design, the liquid cooling charging connector further includes a booster handle structure, the booster handle structure is disposed around a part of an outer circumferential surface of the housing, and two ends of the booster handle structure are rotatably connected to the housing. A guide rail structure with an opening at one end is disposed at each of the two ends of the booster handle structure, each guide rail structure penetrates an end part of one of the two ends in a direction in which the two ends of the booster handle structure are arranged, and the opening of each guide rail structure faces a direction away from a liquid cooling charging connector cable of the liquid cooling charging connector.

Based on the foregoing solution, the user may hold the booster handle structure to rotate counterclockwise or clockwise, so that the booster handle structure rotates around the housing. In the process in which the booster handle structure rotates around the housing, the liquid cooling charging connector moves toward the liquid cooling connector. In this way, the liquid cooling charging connector can be more conveniently plugged into the liquid cooling connector. This saves force for the user to insert the liquid cooling charging connector into the liquid cooling connector, thereby improving user experience.

With reference to the first aspect, in a possible design, the liquid cooling charging connector further includes a hooking member, the hooking member and the booster handle structure are disposed in parallel in the direction in which the two ends of the booster handle structure are arranged, and the hooking member is rotatably connected to the booster handle structure. The hooking member includes a bending portion, and the bending portion is bent in a direction in which two oppositely disposed rail surfaces of the guide rail structure are arranged.

Based on the foregoing solution, in the process in which the liquid cooling charging connector is plugged into the liquid cooling connector, the bending portion of the hooking member may hook a fifth protrusion structure of the liquid cooling connector, to avoid movement of a relative position between the liquid cooling charging connector and the liquid cooling connector. This can ensure smooth transmission of the coolant, and can further ensure normal high-power charging of the electric vehicle.

With reference to the first aspect, in a possible design, an end face that is of one of the two ends of the booster handle structure and that is away from the housing includes a second protrusion structure, the second protrusion structure includes a through hole, and the through hole penetrates the second protrusion structure in a direction perpendicular to a protrusion direction of the second protrusion structure.

Based on the foregoing solution, in the process in which the liquid cooling charging connector is plugged into the liquid cooling connector, when the relative position between the liquid cooling charging connector and the liquid cooling connector is fastened, the through hole of the second protrusion structure may allow a column structure of the liquid cooling charging connector to pass through, to lock the connection between the liquid cooling charging connector and the liquid cooling connector. This can avoid a charging exception caused by accidental removal of the liquid cooling charging connector in the charging process, and can ensure normal charging of the electric vehicle.

According to a second aspect, a liquid cooling connector is provided. The liquid cooling connector is configured to connect to a liquid cooling charging connector, the liquid cooling connector includes a housing, a liquid cooling socket, and an electric socket, the housing includes a bottom plate, the bottom plate includes a plurality of jacks, and the liquid cooling socket and the electric socket pass through the bottom plate through different jacks. The liquid cooling socket includes a liquid inlet socket and a liquid outlet socket, the liquid inlet socket is configured to transmit, to a to-be-cooled component of an electric vehicle, coolant output by the liquid cooling charging connector, and the liquid outlet socket is configured to transmit, to the liquid cooling charging connector, the coolant that passes through the to-be-cooled component. The electric socket includes a connection confirm socket. The connection confirm socket is configured to connect to a connection confirm plug of the liquid cooling charging connector. The connection confirm socket is further configured to connect to a connection confirm circuit. A voltage at a detection point in the connection confirm circuit indicates a state of a connection between the electric vehicle and the liquid cooling charging connector. The bottom plate includes a plurality of spaced accommodation cavities, and the liquid cooling socket and the electric socket are located in different accommodation cavities.

In this embodiment of this application, when the electric vehicle is charged at high power, the coolant can be transmitted to the electric vehicle by using the liquid cooling connector, to assist a thermal management system on the vehicle in dissipating heat for a power battery of the vehicle. In this way, a liquid cooling device outside the vehicle improves a heat dissipation capability of a battery management system on the vehicle for the power battery of the vehicle, to meet a heat dissipation requirement for high-power charging of the power battery.

In addition, in this application, it is designed that the liquid cooling socket and the electric socket are located in the different accommodation cavities, to prevent the coolant flowing through the liquid cooling socket from flowing into the electric socket, so as to avoid a charging accident that may be caused by the coolant flowing into the electric socket. This improves safety of charging the electric vehicle and user experience.

With reference to the second aspect, in a possible design, a projection of the liquid cooling socket does not overlap a projection of the electric socket in a gravity direction.

In this embodiment of this application, because the projection of the liquid cooling socket does not overlap the projection of the electric socket in the gravity direction, even if a connection between the liquid cooling socket and the liquid cooling plug becomes loose, and a small amount of coolant drops downward in the gravity direction, the coolant does not flow into the electric socket. This can avoid a charging exception that may be caused by the coolant flowing into the electric socket, and ensure normal charging of the electric vehicle; and can even avoid a charging accident that may be caused by the coolant flowing into the electric socket, thereby improving safety of charging the electric vehicle.

In addition, in this design, when the liquid cooling charging connector is removed from the liquid cooling connector, even if a small amount of coolant drops from the liquid cooling socket of the liquid cooling connector, the small amount of coolant does not flow into the electric socket. This can avoid a personal injury to a user caused when the user accidentally touches the electric socket, to ensure safety of the user. In addition, this can also avoid a charging accident caused by the coolant in the electric socket when the liquid cooling charging connector is plugged into the liquid cooling connector again, thereby improving safety of charging the electric vehicle.

With reference to the second aspect, in a possible design, a distance between one end of the liquid cooling socket and the bottom plate is greater than a distance between one end of the connection confirm socket and the bottom plate, or a distance between one end of the liquid cooling socket and an end face that is of the accommodation cavity and that is away from the bottom plate is less than a distance between one end of the connection confirm socket and an end face that is of the accommodation cavity and that is away from the bottom plate. Both the one end of the liquid cooling socket and the one end of the connection confirm socket are exposed outside the housing.

In this embodiment of this application, it is designed that the distance between the one end of the liquid cooling socket and the bottom plate is greater than the distance between the one end of the connection confirm socket and the bottom plate, or the distance between the one end of the liquid cooling socket and the end face that is of the accommodation cavity and that is away from the bottom plate is less than the distance between the one end of the connection confirm socket and the end face that is of the accommodation cavity and that is away from the bottom plate. In this way, when the liquid cooling charging connector is plugged into the liquid cooling connector, the liquid cooling socket is preferably connected to the liquid cooling plug, and then the connection confirm socket is connected to the connection confirm plug, to prevent the electric vehicle from incorrectly determining a state of a connection between the liquid cooling plug and the liquid cooling socket, to avoid coolant leakage. This helps the liquid cooling device outside the vehicle normally dissipate heat for the power battery of the electric vehicle when a charging pile charges the electric vehicle at high power, to meet a heat dissipation requirement for high-power charging of the power battery.

With reference to the second aspect, in a possible design, the connection confirm socket includes a first connection confirm socket and a second connection confirm socket. A distance between one end of the first connection confirm socket and the bottom plate is less than a distance between one end of the second connection confirm socket and the bottom plate, or a distance between one end of the first connection confirm socket and the end face that is of the accommodation cavity and that is away from the bottom plate is greater than a distance between one end of the second connection confirm socket and the end face that is of the accommodation cavity and that is away from the bottom plate.

In this embodiment of this application, it is designed that the distance between the one end of the first connection confirm socket and the bottom plate is less than the distance between the one end of the second connection confirm socket and the bottom plate, or the distance between the one end of the first connection confirm socket and the end face that is of the accommodation cavity and that is away from the bottom plate is greater than the distance between the one end of the second connection confirm socket and the end face that is of the accommodation cavity and that is away from the bottom plate. In this way, in the process in which the liquid cooling charging connector is plugged into the liquid cooling connector, the second connection confirm plug is first connected to the second connection confirm socket, and then the first connection confirm plug is connected to the first connection confirm socket. It is equivalent to that the liquid cooling device finally confirms a complete connection between the liquid cooling socket and the liquid cooling plug. This can avoid a charging start delay caused when the electric vehicle finally confirms the complete connection between the liquid cooling socket and the liquid cooling plug, thereby shortening charging start duration, and improving charging start efficiency.

With reference to the second aspect, in a possible design, the electric socket further includes a communication socket, and the communication socket is configured to connect to a communication plug of the liquid cooling charging connector. A distance between one end of the communication socket and the bottom plate is equal to the distance between the one end of the first connection confirm socket and the bottom plate, or a distance between one end of the communication socket and the end face that is of the accommodation cavity and that is away from the bottom plate is equal to the distance between the one end of the first connection confirm socket and the end face that is of the accommodation cavity and that is away from the bottom plate. The one end of the communication socket is exposed outside the housing.

Based on the foregoing solution, in the process in which the liquid cooling charging connector is plugged into the liquid cooling connector, the second connection confirm plug is first connected to the second connection confirm socket, then the communication plug is connected to the communication socket, and finally the first connection confirm plug is connected to the first connection confirm socket. In this way, after the electric vehicle confirms the connection between the liquid cooling plug and the liquid cooling socket, the electric vehicle and the liquid cooling device may send packets to each other when the communication plug is connected to the communication socket. When the liquid cooling device confirms the connection between the liquid cooling socket and the liquid cooling plug, the liquid cooling device may transmit the coolant to the electric vehicle, to prepare for entering a charging phase. This can avoid a packet sending delay caused when the communication plug is connected to the communication socket after the connection confirm plug is connected to the connection confirm socket, thereby shortening the charging start duration, and improving the charging start efficiency.

In addition, in this application, it is designed that the distance between the one end of the communication socket and the bottom plate is equal to the distance between the one end of the first connection confirm socket and the bottom plate, to reduce a size of the liquid cooling connector. This facilitates integration of the liquid cooling connector, and facilitates mounting the liquid cooling connector on the electric vehicle.

In addition, the communication socket and the connection confirm socket are disposed in a same accommodation cavity, to reduce a quantity of accommodation cavities. This can simplify a design, and reduce processing complexity.

With reference to the second aspect, in a possible design, the electric socket further includes a ground socket, and the ground socket is configured to connect to a ground plug of the liquid cooling charging connector. A distance between one end of the ground socket and the bottom plate is less than the distance between the one end of the liquid cooling socket and the bottom plate, and the distance between the one end of the ground socket and the bottom plate is greater than the distance between the one end of the connection confirm socket and the bottom plate; or a distance between one end of the ground socket and the end face that is of the accommodation cavity and that is away from the bottom plate is greater than the distance between the one end of the liquid cooling socket and the end face that is of the accommodation cavity and that is away from the bottom plate, and the distance between the one end of the ground socket and the end face that is of the accommodation cavity and that is away from the bottom plate is less than the distance between the one end of the connection confirm socket and the end face that is of the accommodation cavity and that is away from the bottom plate. The one end of the ground socket is exposed outside the housing.

Based on the foregoing solution, in the process in which the liquid cooling charging connector is plugged into the liquid cooling connector, a connection between the ground plug and the ground socket lags behind the connection between the liquid cooling plug and the liquid cooling socket, and the connection between the ground plug and the ground socket is prior to the connection between the connection confirm plug and the connection confirm socket. This design helps the electric vehicle accurately determine the state of the connection between the liquid cooling plug and the liquid cooling socket based on the connection confirm plug and the connection confirm socket, can improve accuracy of determining the state of the connection between the liquid cooling plug and the liquid cooling socket by the electric vehicle, and can further ensure normal high-power charging of the electric vehicle.

With reference to the second aspect, in a possible design, the liquid cooling connector further includes a guide post, the guide post and the accommodation cavity are located on a same side of the bottom plate, and the guide post is configured to plug into a guide hole of the liquid cooling charging connector. A distance between one end that is of the guide post and that is away from the bottom plate and the bottom plate is greater than the distance between the one end of the liquid cooling socket and the bottom plate, where the one end of the liquid cooling socket is exposed outside the housing.

Based on the foregoing solution, a connection between the guide post of the liquid cooling connector and the guide hole of the liquid cooling charging connector is prior to the connection between the liquid cooling plug and the liquid cooling socket. In other words, compared with another socket of the liquid cooling connector, the guide post of the liquid cooling connector is first connected to the guide hole of the liquid cooling charging connector. In this way, a position of the liquid cooling connector basically corresponds to a position of the liquid cooling charging connector. This helps the user accurately plug the liquid cooling charging connector into the liquid cooling connector subsequently.

With reference to the second aspect, in a possible design, the bottom plate further includes a guide groove or a guide hole, and the guide groove or the guide hole is configured to accommodate a guide post of the liquid cooling charging connector.

Based on the foregoing solution, the guide post of the liquid cooling charging connector is plugged into the guide groove or the guide hole of the liquid cooling connector, and a connection between the guide groove or the guide hole and the guide post of the liquid cooling charging connector is prior to the connection between the liquid cooling plug and the liquid cooling socket. This helps the user accurately plug the liquid cooling charging connector into the liquid cooling connector.

With reference to the second aspect, in a possible design, the bottom plate further includes a third protrusion structure, and the third protrusion structure and the accommodation cavity are located on a same side of the bottom plate. The third protrusion structure includes two oppositely disposed ends, one of the two ends of the third protrusion structure abuts against the bottom plate, the third protrusion structure further includes a through hole, the through hole penetrates the third protrusion structure in a direction in which the two ends of the third protrusion structure are arranged, and a side wall of the through hole and a part that is of the bottom plate and that corresponds to the third protrusion structure jointly enclose a guide groove.

Based on the foregoing solution, the side wall of the through hole and the part that is of the bottom plate and that corresponds to the third protrusion structure jointly enclose the guide groove. Therefore, a requirement on a thickness of the bottom plate of the liquid cooling connector is low. In other words, the bottom plate of the liquid cooling connector may be designed as a thin plate, to reduce the size of the liquid cooling connector. This facilitates integration of the liquid cooling connector, and facilitates mounting the liquid cooling connector on the electric vehicle.

With reference to the second aspect, in a possible design, the liquid cooling connector further includes a fourth protrusion structure, and the fourth protrusion structure is disposed around the accommodation cavities. The fourth protrusion structure includes two oppositely disposed side walls in a direction perpendicular to the gravity direction, each of the two side walls includes one fifth protrusion structure, and each fifth protrusion structure protrudes from the corresponding side wall in the direction perpendicular to the gravity direction.

Based on the foregoing solution, in the process in which the liquid cooling charging connector is plugged into the liquid cooling connector, the two fifth protrusion structures of the liquid cooling connector slide along corresponding guide rail structures of the liquid cooling charging connector respectively. When the plug of the liquid cooling charging connector is connected to the corresponding socket of the liquid cooling connector, the two fifth protrusion structures reach the bottoms of the guide rail structures respectively. This helps save force for the user to insert the liquid cooling charging connector into the liquid cooling connector, thereby improving user experience.

With reference to the second aspect, in a possible design, the liquid cooling connector further includes a column structure, and the column structure is located on a side that is of the bottom plate and that is away from the fourth protrusion structure. The bottom plate further includes a through hole, and a projection of the column structure overlaps a projection of the through hole in an extension direction of the through hole. The column structure is further connected to a driving member, and the driving member is configured to drive the column structure to move in the extension direction of the through hole, for the column structure to pass through the through hole.

Based on the foregoing solution, in the process in which the liquid cooling charging connector is plugged into the liquid cooling connector, when a relative position between the liquid cooling connector and the liquid cooling charging connector is fastened, the driving member may drive the column structure to move in the extension direction of the through hole, so that the column structure passes through the through hole, and then passes through a through hole of the liquid cooling charging connector, to lock the connection between the liquid cooling charging connector and the liquid cooling connector. This can avoid a charging exception caused by accidental removal of the liquid cooling charging connector in the charging process, and ensure normal charging of the electric vehicle.

According to a third aspect, a liquid cooling device is provided. The liquid cooling device includes a liquid cooling unit and the liquid cooling charging connector in any one of the first aspect or the possible designs of the first aspect. The liquid cooling unit includes coolant, and the liquid cooling charging connector is configured to transmit the coolant of the liquid cooling unit to the electric vehicle.

In this embodiment of this application, for beneficial effect of the third aspect, refer to related descriptions of the beneficial effect in any one of the first aspect or the possible designs of the first aspect. Details are not described herein again.

According to a fourth aspect, an electric vehicle is provided. The electric vehicle includes a power battery and the liquid cooling connector in any one of the second aspect or the possible designs of the second aspect. The liquid cooling connector is configured to transmit coolant from a liquid cooling device to the power battery.

In this embodiment of this application, for beneficial effect of the fourth aspect, refer to related descriptions of the beneficial effect in any one of the second aspect or the possible designs of the second aspect. Details are not described herein again.

### BRIEF DESCRIPTION OF DRAWINGS

FIG. 1 is a diagram of a structure of a charging system according to an embodiment of this application;
FIG. 2 is a diagram of a structure of the charging system shown in FIG. 1;
FIG. 3 and FIG. 4 are diagrams of a liquid cooling connection apparatus according to this application;
FIG. 5 is a diagram of a port of a liquid cooling charging connector according to an embodiment of this application;
FIG. 6 is a diagram of a port of a liquid cooling connector according to an embodiment of this application;
FIG. 7 is a diagram of a port of a liquid cooling charging connector according to another embodiment of this application;
FIG. 8 is a diagram of a port of a liquid cooling connector according to another embodiment of this application;
FIG. 9 is a diagram of a port of a liquid cooling charging connector according to another embodiment of this application;
FIG. 10 is a diagram of a port of a liquid cooling connector according to another embodiment of this application;
FIG. 11 is a diagram of a port of a liquid cooling charging connector according to another embodiment of this application;
FIG. 12 is a diagram of a port of a liquid cooling connector according to another embodiment of this application;
FIG. 13 is another diagram of a liquid cooling connection apparatus according to this application;
FIG. 14 is a diagram of an interface of ports of a liquid cooling charging connector and a liquid cooling connector according to an embodiment of this application;
FIG. 15 is a diagram of a port of a liquid cooling charging connector according to another embodiment of this application;
FIG. 16 is a diagram of a port of a liquid cooling connector according to another embodiment of this application;
FIG. 17 is a diagram of a port of a liquid cooling connector according to another embodiment of this application;
FIG. 18 is a diagram of a port of a liquid cooling connector according to another embodiment of this application;
FIG. 19 is a diagram of a port of a liquid cooling charging connector according to another embodiment of this application;
FIG. 20 is a diagram of a port of a liquid cooling charging connector according to another embodiment of this application;
FIG. 21 is a diagram of a liquid cooling connection apparatus according to another embodiment of this application;
FIG. 22 is a diagram of a liquid cooling charging connector according to another embodiment of this application;
FIG. 23 is a diagram of a liquid cooling connection apparatus according to another embodiment of this application;
FIG. 24 is a diagram of a port of a liquid cooling charging connector according to another embodiment of this application; and
FIG. 25 is a diagram of a port of a liquid cooling connector according to another embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are merely intended to distinguish different described objects, and impose no limitation on positions, a sequence, priorities, quantities, content, or the like of the described objects. In embodiments of this application, use of a prefix word, for example, an ordinal number, for distinguishing between the described objects does not constitute a limitation on the described objects. For descriptions of the described objects, refer to context descriptions in claims or embodiments. Use of such a prefix word should not constitute a redundant limitation. In addition, in the descriptions of embodiments, unless otherwise specified, "a plurality of" means two or more.

With development of new energy vehicle technologies, many vehicle manufacturers gradually launch electric vehicles. The electric vehicles have become a choice for many users because of energy conservation, environmental protection, and relatively mature technologies.

This application may be applied in a system in which a power supply apparatus and a load charge each other through a power allocation matrix. Especially, in a system including a charging pile and an electric vehicle, the charging pile may charge the electric vehicle with electric energy that is from a power grid, or the electric vehicle may reversely output electric energy of the electric vehicle to the power grid.

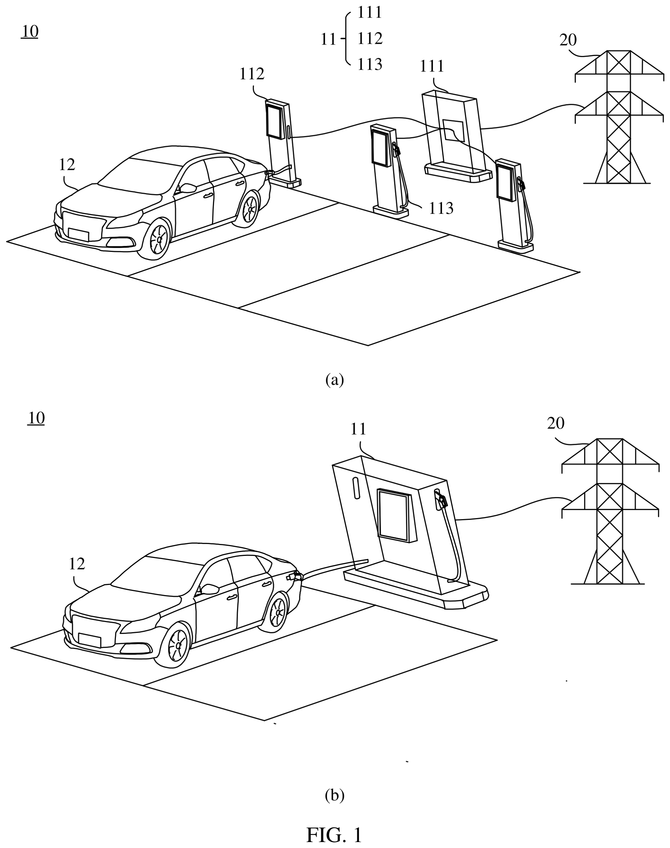

FIG. 1 is a diagram of an example of a structure of a charging system 10 according to an embodiment of this application.

With reference to (a) in FIG. 1 and (b) in FIG. 1, the charging system 10 may include a charging pile 11 and an electric vehicle 12. The charging pile 11 may be configured to: receive an alternating current output by an external power grid 20, convert the alternating current into a stable direct current, and then transmit the stable direct current to the electric vehicle 12, to charge the electric vehicle 12. Alternatively, the electric vehicle 12 may reversely output electric energy to the external power grid 20.

In some embodiments, as shown in (a) in FIG. 1, the charging pile 11 is a split charging pile. Specifically, the charging pile 11 may include a charging power unit 111, at least one charging dispenser 112, and at least one charging connector 113. The charging power unit 111 includes a plurality of charging modules (not shown in the figure), and output ends of the plurality of charging modules are connected to the at least one charging dispenser 112. The at least one charging dispenser 112 is connected to the at least one charging connector 113, and each charging connector 113 is configured to connect to the electric vehicle 12. For example, one charging dispenser 112 may be connected to one or more charging connectors 113, and the one or more charging connectors 113 may be connected to the same electric vehicle 12.

The charging module may include, for example, a plurality of power conversion apparatuses. The plurality of power conversion apparatuses may convert the alternating current that is from the external power grid 20 into a stable direct current, and then transmit the stable direct current to the charging dispenser 112. The plurality of power conversion apparatuses may include, for example, an alternating current-direct current (alternating current-direct current, AC-DC) conversion apparatus and a direct current-direct current (direct current-direct current, DC-DC) conversion apparatus. The charging dispenser 112 transmits the stable direct current to the electric vehicle 12 via the charging connector 113, to charge the electric vehicle 12.

The charging dispenser 112 may include a housing, a human-computer interaction interface, a charging control unit, a metering and billing unit, and the like, and is configured to perform information exchange, energy transmission, metering and billing, and the like with the electric vehicle 12.

The electric vehicle 12 may be a transportation vehicle driven by electric energy to travel. The electric vehicle 12 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging pile 11 is an integrated charging pile. Specifically, a human-computer interaction interface, a charging control unit, a metering and billing unit, and the like may be directly disposed in a charging power unit 111 in the charging pile 11, so that the charging pile 11 can include only the charging power unit 111 and at least one charging connector 113 connected to the charging power unit 111, and does not include a charging dispenser 112. A plurality of power conversion apparatuses in the charging power unit 111 may convert an alternating current from an external power grid 20 into a stable direct current, and then directly transmit the stable direct current to the electric vehicle 12 via the charging connector 113.

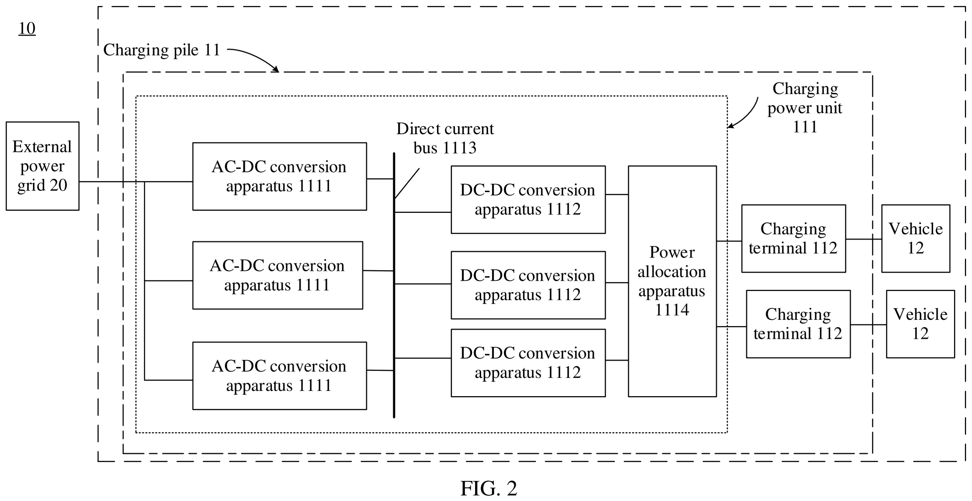

FIG. 2 is a diagram of a structure of the charging system 10 shown in FIG. 1. The charging power unit 111 may include a plurality of AC-DC conversion apparatuses 1111, DC-DC conversion apparatuses 1112, a direct current bus 1113, and a power allocation apparatus 1114.

Input ends of the plurality of AC-DC conversion apparatuses 1111 may be connected to the external power grid 20, and output ends of the plurality of AC-DC conversion apparatuses 1111 may be connected to the direct current bus 1113. In other words, the plurality of AC-DC conversion apparatuses 1111 may be connected in parallel between the external power grid 20 and the direct current bus 1113. The plurality of AC-DC conversion apparatuses 1111 may be configured to: receive an alternating current from the external power grid 20, convert the alternating current into direct currents, and output the direct currents through the direct current bus 1113.

An input end of the DC-DC conversion apparatus 1112 may be connected to the direct current bus 1113, and an output end of the DC-DC conversion apparatus 1112 may be connected to the charging dispenser 112 through the power allocation apparatus 1114. The DC-DC conversion apparatuses 1112 may receive, through the direct current bus 1113, the direct currents output by the plurality of AC-DC conversion apparatuses 1111, further convert the direct currents into direct currents applicable to the electric vehicle 12, and then transmit the direct currents to the power allocation apparatus 1114. The power allocation apparatus 1114 may dynamically allocate, based on charging power actually required by the electric vehicle, the direct currents output by the plurality of DC-DC conversion apparatuses 1112; and allocated charging power is transmitted to the electric vehicle 12 through the charging dispenser 112, to charge the electric vehicle 12.

With development of technologies in the new energy field, electric vehicles are increasingly popularized. Currently, as users have increasingly high requirements on charging time of electric vehicles, charging piles output increasingly high charging power to direct current sockets. As the charging power increases, for example, in an ultra-fast charging scenario, a power battery generates more heat, effect of heat dissipation only via a thermal management system is limited, and a heat dissipation capability of the thermal management system cannot meet a heat dissipation requirement of the power battery during high-power charging.

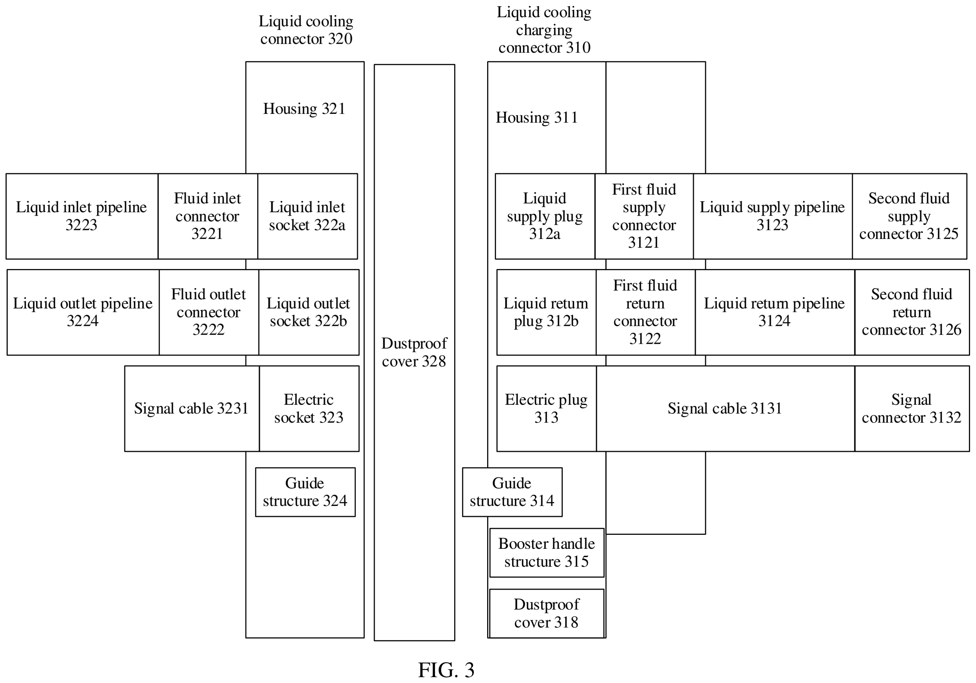

In view of this, this application provides a liquid cooling charging connector 310 and a liquid cooling connector 320. As shown in FIG. 3, the liquid cooling charging connector 310 and the liquid cooling connector 320 may be collectively referred to as a liquid cooling connection apparatus.

The liquid cooling charging connector 310 includes a housing 311, a liquid supply plug 312a (the liquid supply plug 312a may also be referred to as a female/male inlet plug of a fluid connector), a first fluid supply connector 3121, a liquid supply pipeline 3123, a second fluid supply connector 3125, a liquid return plug 312b (the liquid return plug 312b may also be referred to as a female/male outlet plug of the fluid connector), a first fluid return connector 3122, a liquid return pipeline 3124, a second fluid return connector 3126, an electric plug 313 (the electric plug 313 may also be referred to as a female/male plug of a signal connector), a signal cable 3131, a signal connector 3132, a guide structure 314 (the guide structure 314 may also be referred to as a guide post, a guide groove, or a guide hole below), a booster handle structure 315, and a dustproof cover 318.

The liquid cooling connector 320 includes a housing 321, a liquid inlet socket 322a (the liquid inlet socket may also be referred to as a male/female inlet socket of the fluid connector), a fluid inlet connector 3221, a liquid inlet pipeline 3223, a liquid outlet socket 322b (the liquid outlet socket may also be referred to as a male/female outlet socket of the fluid connector), a fluid outlet connector 3222, a liquid outlet pipeline 3224, an electric socket 323 (the electric socket may also be referred to as a male/female socket of the signal connector), a signal cable 3231, a guide structure 324 (the guide structure 324 may also be referred to as a guide post, a guide groove, or a guide hole below), and a dustproof cover 328.

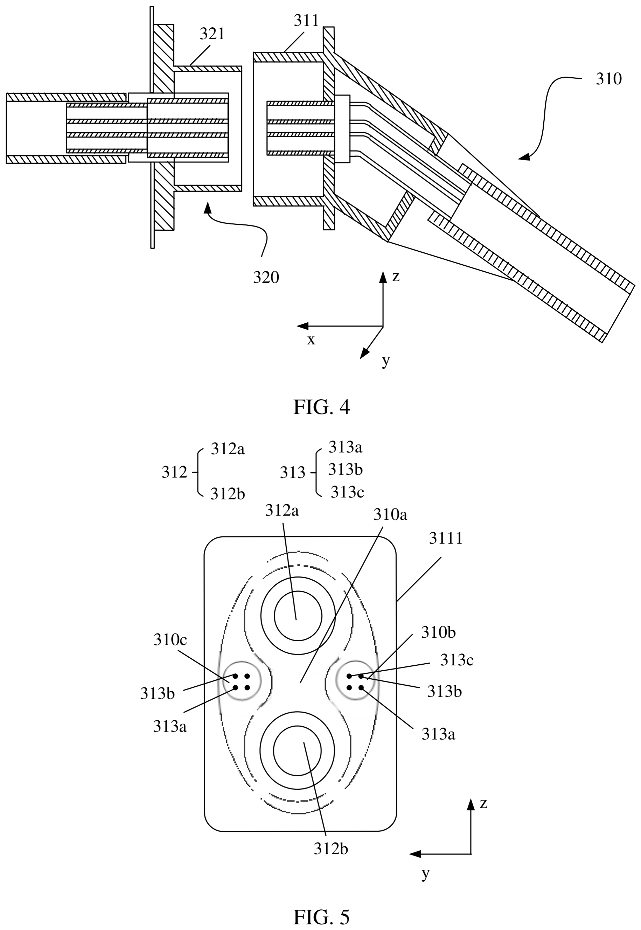

In this embodiment of this application, the liquid cooling charging connector 310 is configured to connect to the liquid cooling connector 320 disposed on the electric vehicle, and may be specifically connected to the liquid cooling connector 320 in a plugging direction. As shown in FIG. 4, with reference to a coordinate direction in the figure, a direction shown by an x axis indicates the plugging direction, a direction shown by a y axis indicates a first direction, and a direction shown by a z axis indicates a second direction. The second direction may be perpendicular to the first direction, and the plugging direction may be perpendicular to the first direction and the second direction. The x direction is the plugging direction of the liquid cooling charging connector 310 and the liquid cooling connector 320, and is referred to as a plugging direction for short. Therefore, the second direction and the third direction are separately perpendicular to the plugging direction. In actual application, the plugging direction may be a horizontal direction, or the plugging direction may be a direction that has a specific upward inclination angle with the horizontal direction.

The liquid cooling charging connector 310 may include the housing 311, and the liquid cooling connector 320 may include the housing 321. When the liquid cooling charging connector 310 is plugged into the liquid cooling connector 320, one end, that is of each plug of the cooling charging connector 310 and that is exposed outside the housing 311 may be plugged into one end, that is of a corresponding socket of the liquid cooling connector 320 and that is exposed outside the housing 321. The other end of each plug of the liquid cooling charging connector 310 may be connected to a liquid cooling unit outside the vehicle, and the other end of each socket of the liquid cooling connector 320 may be connected to a coolant pipeline of a thermal management system of the vehicle.

FIG. 5 is a diagram of a port of a liquid cooling charging connector 310 according to an embodiment of this application. As shown in FIG. 5, the liquid cooling charging connector 310 includes the housing 311, a liquid cooling plug 312, and the electric plug 313. The housing 311 includes a bottom plate 3111, and the bottom plate 3111 includes a plurality of jacks, and both the liquid cooling plug 312 and the electric plug 313 passes through the bottom plate 3111 through different jacks.

The liquid cooling plug 312 includes the liquid supply plug 312a and the liquid return plug 312b. The liquid supply plug 312a is configured to transmit coolant of the liquid cooling unit to the electric vehicle, and the liquid return plug 312b is configured to transmit the coolant output by the electric vehicle to the liquid cooling unit. The electric plug 313 includes a connection confirm plug 313a, the connection confirm plug 313a is configured to connect to a connection confirm socket of the electric vehicle, and the connection confirm plug 313a is further configured to connect to a connection confirm circuit, and a voltage at a detection point in the connection confirm circuit indicates a state of a connection between the liquid cooling charging connector 310 and the electric vehicle.

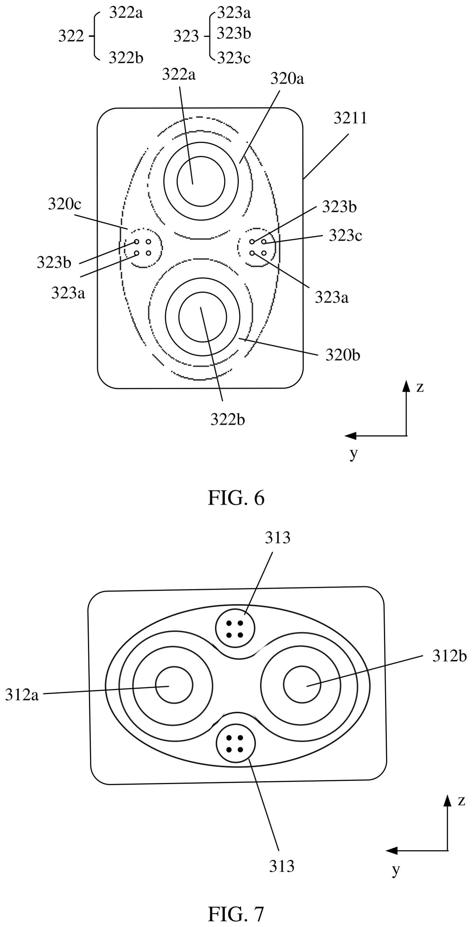

FIG. 6 is a diagram of a port of a liquid cooling connector 320 according to this application. As shown in FIG. 6, the liquid cooling connector 320 includes the housing 321, a liquid cooling socket 322, and the electric socket 323. The housing 321 includes a bottom plate 3211, and the bottom plate 3211 includes a plurality of jacks, and the liquid cooling socket 322 and the electric socket 323 pass through the bottom plate 3211 through different jacks.

The liquid cooling socket 322 includes the liquid inlet socket 322a and the liquid outlet socket 322b. The liquid inlet socket 322a is configured to transmit the coolant output by the liquid cooling charging connector 310 to a to-be-cooled component of the electric vehicle, and the liquid outlet socket 322b is configured to transmit the coolant passing through the to-be-cooled component to the liquid cooling charging connector 310. The electric socket 323 includes the connection confirm socket 323a, the connection confirm socket 323a is configured to connect to the connection confirm plug 313a of the liquid cooling charging connector 310, and the connection confirm socket 323a is further configured to connect to the connection confirm circuit, and the voltage at the detection point in the connection confirm circuit indicates the state of the connection between the electric vehicle and the liquid cooling charging connector 310.

In actual application, when the liquid cooling charging connector 310 is plugged into the liquid cooling connector 320, the liquid supply plug 312a is connected to the liquid inlet socket 322a, and the liquid return plug 312b is connected to the liquid outlet socket 322b. In this case, a structure condition for communication between a liquid cooling device and the coolant pipeline of the thermal management system to transmit the coolant is met. When the liquid cooling charging connector 310 is plugged into the liquid cooling connector 320, and a vehicle controller detects that the connection confirm plug 313a is electrically connected to the connection confirm socket 323a, the vehicle controller controls the coolant pipeline (for example, the liquid inlet pipeline 3223 and the liquid outlet pipeline 3224 in FIG. 3) of the thermal management system to be open. The vehicle controller communicates with a liquid cooling device controller, and the liquid cooling device controller controls the liquid cooling device to be started. In this way, the coolant pipeline of the thermal management system and a coolant pipeline (for example, the liquid supply pipeline 3123 and the liquid return pipeline 3124 in FIG. 3) of the liquid cooling unit may transmit the coolant through the connected liquid supply plug 312a and liquid inlet socket 322a and the connected liquid return plug 312b and liquid outlet socket 322b. The liquid cooling device can assist the thermal management system in dissipating heat for a power battery of the vehicle. In this way, the liquid cooling device outside the vehicle improves a heat dissipation capability of the thermal management system on the vehicle for the power battery of the vehicle, to meet a heat dissipation requirement for high-power charging of the power battery.

In this embodiment of this application, for the liquid cooling charging connector 310, the bottom plate 3111 of the liquid cooling charging connector 310 includes a plurality of spaced accommodation cavities, and the liquid cooling plug 312 and electric plugs 313 are located in different accommodation cavities, for example, accommodation cavities 310a, 310b, and 310c shown in FIG. 5. Specifically, the liquid cooling plug 312 is located in the accommodation cavity 310a, and the electric plugs 313 are located in the accommodation cavities 310b and 310c. It may be understood that the liquid cooling plug 312 is isolated from the electric plugs 313 via the accommodation cavities.

In this application, it is designed that the liquid cooling plug 312 and the electric plug 313 are located in the different accommodation cavities, to prevent the coolant flowing through the liquid cooling plug 312 from flowing into the electric plug 313, so as to avoid a charging accident that may be caused by the coolant flowing into the electric plug. This improves safety of charging the electric vehicle. Specifically, in a process in which the liquid cooling charging connector 310 transmits the coolant to the power battery through the liquid cooling connector 320, because the liquid cooling plug 312 and the electric plug 313 are located in different accommodation cavities, a probability that the coolant flowing through the liquid cooling plug 312 enters the electric plug 313 can be reduced, to avoid a charging exception that may be caused by the coolant entering into the electric plug 313, and facilitate normal charging of the electric vehicle. This improves safety of charging the electric vehicle and user experience.

For the liquid cooling connector 320, the bottom plate 3211 of the liquid cooling connector 320 includes a plurality of spaced accommodation cavities, and the liquid cooling socket 322 and electric sockets 323 are located in different accommodation cavities, for example, accommodation cavities 320a, 320b, and 320c shown in FIG. 6. Specifically, the liquid cooling socket 322 is located in the accommodation cavity 320a, and the electric sockets 323 are located in the accommodation cavities 320b and 320c. It may be understood that the liquid cooling socket 322 is isolated from the electric sockets 323 via the accommodation cavities.

In this application, it is designed that the liquid cooling socket 322 and the electric socket 323 are located in the different accommodation cavities, to prevent the coolant flowing through the liquid cooling socket 322 from flowing into the electric socket 323, so as to avoid a charging accident that may be caused by the coolant flowing into the electric socket. This improves safety of charging the electric vehicle. Specifically, in a process in which the liquid cooling charging connector 310 transmits the coolant to the power battery through the liquid cooling connector 320, because the liquid cooling socket 322 and the electric socket 323 are located in different accommodation cavities, a probability that the coolant flowing through the liquid cooling socket 322 enters the electric socket 323 can be reduced, to avoid a charging exception that may be caused by the coolant entering into the electric socket 323, and facilitate normal charging of the electric vehicle. This improves safety of charging the electric vehicle and user experience.

It should be understood that a specific disposing manner in which the liquid cooling plug 312 and the electric plug 313 are located in the accommodation cavities shown in FIG. 5 is merely an example. In a possible implementation, the liquid supply plug 312a and the liquid return plug 312b of the liquid cooling plug 312 are disposed in two different accommodation cavities, and the electric plug 313 is disposed in an accommodation cavity other than the two accommodation cavities. Similarly, a specific disposing manner in which the liquid cooling socket 322 and the electric socket 323 are located in the accommodation cavities shown in FIG. 6 is merely an example. The liquid inlet socket 322a and the liquid outlet socket 322b of the liquid cooling socket 322 are disposed in two different accommodation cavities, and the electric socket 323 is disposed in an accommodation cavity other than the two accommodation cavities.

In the diagram shown in FIG. 5, because the liquid cooling plug 312 and the electric plug 313 are disposed in the different accommodation cavities, it is equivalent to implementing isolation between the coolant and a current. In addition, the liquid supply plug 312a and the liquid return plug 312b are arranged in a gravity direction, and two electric plugs 313 are arranged in a direction perpendicular to the gravity direction. When the liquid cooling charging connector 310 transmits the coolant to the electric vehicle, the coolant flowing through the liquid cooling plug 312 does not flow into the electric plug 313, to avoid a charging exception or a charging accident that may be caused by the coolant flowing into the electric plug 313. This improves safety of charging the electric vehicle.

In the diagram shown in FIG. 6, because the liquid cooling socket 322 and the electric socket 323 are disposed in the different accommodation cavities, it is equivalent to implementing isolation between the coolant and the current. In addition, the liquid inlet socket 322a and the liquid outlet socket 322b are arranged in the gravity direction, and two electric sockets 323 are arranged in the direction perpendicular to the gravity direction. When the liquid cooling charging connector 310 transmits the coolant to the electric vehicle through the liquid cooling connector 320, the coolant flowing through the liquid cooling socket 322 does not enter the electric socket 323, to avoid a charging exception or a charging accident that may be caused by the coolant flowing into the electric socket 323. This improves safety of charging the electric vehicle.

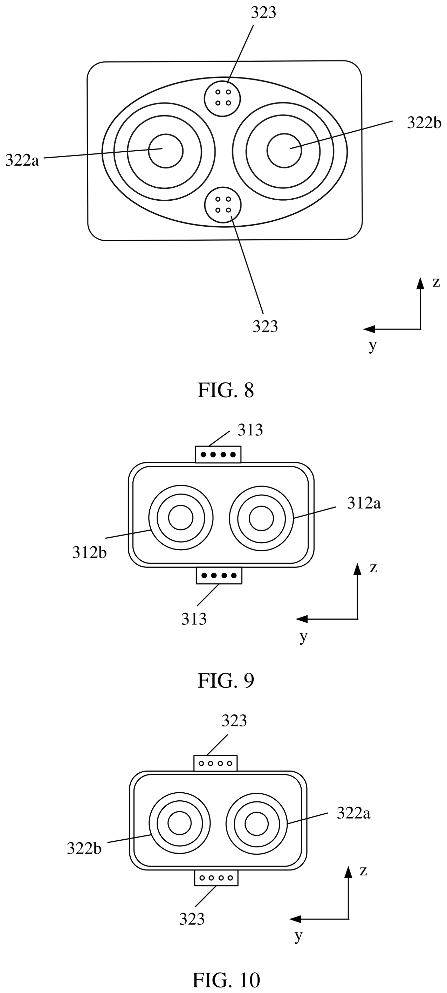

In an embodiment, as shown in FIG. 7, two electric plugs 313 may be arranged in a gravity direction, and the liquid supply plug 312a and the liquid return plug 312b are arranged in a direction perpendicular to the gravity direction. In an embodiment, as shown in FIG. 8, two electric sockets 323 may be arranged in the gravity direction, and the liquid inlet socket 322a and the liquid outlet socket 322b are arranged in the direction perpendicular to the gravity direction.

With reference to FIG. 7 and FIG. 8, this design can still reduce a probability of a charging exception or a charging accident that may be caused by the coolant flowing into the electric plug 313 or the electric socket 323, thereby improving safety of charging the electric vehicle.

Each of FIG. 5 and FIG. 7 shows the direction in which the plugs of the liquid cooling charging connector 310 are arranged. In an actual scenario, in an embodiment, for the liquid cooling charging connector 310, a projection of the liquid cooling plug 312 does not overlap a projection of the electric plug 313 in the gravity direction, to further prevent the coolant from entering the electric plug 313.

Refer to FIG. 5. The gravity direction is a z direction shown in the figure. In other words, the projection of the liquid cooling plug 312 does not overlap the projection of the electric plug 313 in the z direction. In the process in which the liquid cooling charging connector 310 transmits the coolant to the power battery through the liquid cooling connector 320, when the connection between the liquid cooling plug 312 and the liquid cooling socket 322 becomes loose, a small amount of coolant may drop downward in the z direction. Because the projection of the liquid cooling plug 312 does not overlap the projection of the electric plug 313 in the gravity direction, the coolant does not flow into the electric plug 313. This can avoid a charging exception that may be caused by the coolant flowing into the electric plug 313, and ensure normal charging of the electric vehicle; and can even avoid a charging accident that may be caused by the coolant flowing into the electric plug 313, thereby improving safety of charging the electric vehicle.

In addition, this design can further ensure safety of a user. Specifically, when the liquid cooling charging connector 310 is removed from the liquid cooling connector 320, even if a small amount of coolant drops from the liquid cooling plug 312 of the liquid cooling charging connector 310, the small amount of coolant does not flow into the electric plug 313. This can avoid a personal injury to a user caused when the user accidentally touches the electric plug 313, to ensure safety of the user. In addition, this can also avoid a charging accident caused by the coolant in the electric plug 313 when the liquid cooling charging connector 310 is plugged into the liquid cooling connector 320 again, thereby improving safety of charging the electric vehicle.

Each of FIG. 6 and FIG. 8 shows the direction in which the sockets of the liquid cooling connector 320 are arranged. In an actual scenario, in an embodiment, for the liquid cooling connector 320, a projection of the liquid cooling socket 322 does not overlap a projection of the electric socket 323 in the gravity direction, to further prevent the coolant from entering the electric socket 323.

Refer to FIG. 6. The gravity direction is a z direction shown in the figure. In other words, the projection of the liquid cooling socket 322 does not overlap the projection of the electric socket 323 in the z direction. In the process in which the liquid cooling charging connector 310 transmits the coolant to the power battery through the liquid cooling connector 320, when the connection between the liquid cooling socket 322 and the liquid cooling plug 312 becomes loose, a small amount of coolant may drop downward in the z direction. Because the projection of the liquid cooling socket 322 does not overlap the projection of the electric socket 323 in the gravity direction, the coolant does not flow into the electric socket 323. This can avoid a charging exception that may be caused by the coolant flowing into the electric socket 323, and ensure normal charging of the electric vehicle; and can even avoid a charging accident that may be caused by the coolant flowing into the electric socket 323, thereby improving safety of charging the electric vehicle.

In addition, this design can further protect safety of the user. Specifically, when the liquid cooling charging connector 310 is removed from the liquid cooling connector 320, even if a small amount of coolant drops from the liquid cooling socket 322 of the liquid cooling connector 320, the small amount of coolant does not flow into the electric socket 323. This can avoid a personal injury to the user caused when the user accidentally touches the electric socket 323, to ensure safety of the user. In addition, this can also avoid a charging accident caused by the coolant in the electric socket 323 when the liquid cooling charging connector 310 is plugged into the liquid cooling connector 320 again, thereby improving safety of charging the electric vehicle.

For the liquid cooling charging connector 310 shown in FIG. 7, due to a reason similar to that in FIG. 5, the coolant can alternatively be prevented from entering the electric plug 313. This can avoid a charging exception or a charging accident that may be caused by the coolant flowing into the electric plug 313, thereby improving safety of charging the electric vehicle.

For the liquid cooling connector 320 shown in FIG. 8, due to a reason similar to that in FIG. 6, the coolant can alternatively be prevented from entering the electric socket 323. This can avoid a charging exception or a charging accident that may be caused by the coolant flowing into the electric socket 323, thereby improving safety of charging the electric vehicle.

In this embodiment of this application, the liquid supply plug 312a and the liquid return plug 312b are disposed with reference to FIG. 5 or FIG. 7. For example, as shown in FIG. 5, it can be seen that the liquid cooling plug 312 and the electric plug 313 are disposed in an oval connector head body. The liquid supply plug 312a and the liquid return plug 312b are disposed in the accommodation cavity 320a in a shape similar to "8", and two groups of electric plugs 313 are disposed on two sides of the middle of the two plugs: the liquid supply plug 312a and the liquid return plug 312b. In other words, the two groups of electric plugs 313 are disposed close to the middle of the liquid supply plug 312a and the liquid return plug 312b. Therefore, the plugs of the liquid cooling charging connector 310 are disposed compactly. This design can further reduce a size of the liquid cooling charging connector 310, and help the user insert the liquid cooling charging connector 310 into the liquid cooling connector 320, thereby improving user experience.

Similarly, the liquid inlet socket 322a and the liquid outlet socket 322b may be disposed with reference to FIG. 6 or FIG. 8. For example, as shown in FIG. 6, it can be seen that the liquid cooling socket 322 and the electric socket 323 are disposed in an oval liquid cooling connector body. The liquid inlet socket 322a and the liquid outlet socket 322b may be disposed in one accommodation cavity 320a, and two groups of electric sockets 323 are disposed on two sides of the middle of the liquid inlet socket 322a and the liquid outlet socket 322b. In other words, the two groups of electric sockets 323 are disposed close to the middle of the liquid inlet socket 322a and the liquid outlet socket 322b. Therefore, the sockets of the liquid cooling connector 320 are disposed compactly. This design can reduce a size of the liquid cooling connector 320, facilitate a miniaturization design of the liquid cooling connector 320, and facilitate mounting the liquid cooling connector 320 on the electric vehicle.

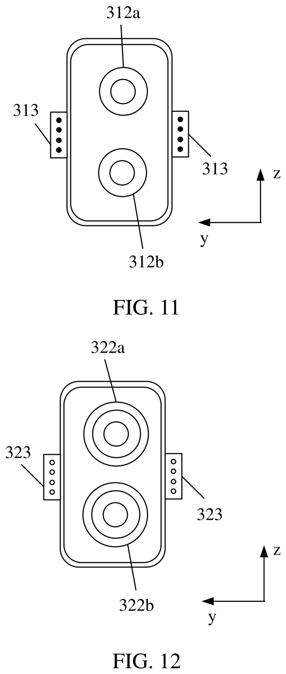

It should be understood that diagrams of cross sections of the liquid cooling charging connector 310 and the liquid cooling connector 320 in the gravity direction shown in FIG. 5 to FIG. 8 are merely possible examples. In an embodiment, for diagrams of cross sections of the liquid cooling charging connector 310 and the liquid cooling connector 320 in the gravity direction, refer to FIG. 9 to FIG. 12. Each of FIG. 9 and FIG. 11 is a diagram of a cross section of the liquid cooling charging connector 310 in a gravity direction, and each of FIG. 10 and FIG. 12 is a diagram of a cross section of the liquid cooling connector 320 in a gravity direction.

Design principles of the liquid cooling charging connector 310 and the liquid cooling connector 320 shown in FIG. 9 to FIG. 12 are similar to those in FIG. 5 to FIG. 8. A difference lies in that shapes of the diagrams of the cross sections in the gravity direction shown in FIG. 9 to FIG. 12 are different from those of the diagrams of cross sections in the gravity direction shown in FIG. 5 to FIG. 8.

Generally, the liquid cooling plug 312 is connected to a liquid cooling pipeline, and the liquid cooling plug 312 may transmit the coolant from a liquid cooling component to the power battery through the liquid cooling pipeline. However, in some cases, the connection between the liquid cooling plug 312 and the liquid cooling pipeline may become loose, resulting in a liquid leakage phenomenon. Therefore, in an embodiment, the liquid supply plug 312a is connected to the liquid cooling unit through the liquid supply pipeline 3123, and the liquid return plug 312b is connected to the liquid cooling unit through the liquid return pipeline 3124. The liquid cooling charging connector further includes two fluid connectors. The liquid supply plug 312a is connected to the liquid supply pipeline 3123 through one of the fluid connectors, and the liquid return plug 312b is connected to the liquid return pipeline 3124 through the other fluid connector.

In this embodiment of this application, for the liquid cooling charging connector 310, the liquid supply plug 312a is connected to the liquid supply pipeline 3123 through one fluid connector. The fluid connector is the first fluid supply connector 3121 in FIG. 3. The fluid connector may fasten the connection between the liquid supply plug 312a and the liquid supply pipeline 3123, to avoid a liquid leakage phenomenon that may occur when the liquid supply plug 312a is directly connected to the liquid supply pipeline 3123. The liquid return plug 312b is connected to the liquid return pipeline through the other fluid connector. The other fluid connector is the first fluid return connector 3122 in FIG. 3. The other fluid connector may fasten the connection between the liquid return plug 312b and the liquid return pipeline 3124, to avoid a liquid leakage phenomenon that may occur when the liquid return plug 312b is directly connected to the liquid return pipeline 3124.

The fluid connector of the liquid cooling charging connector 310 may be specifically a connection nut, a washer, or the like.

It should be understood that disposing the fluid connector of the liquid cooling charging connector 310 can ensure normal high-power charging of the electric vehicle, and can further avoid damage to the power battery and a charging accident. Specifically, when the liquid cooling charging connector 310 is plugged into the liquid cooling connector 320 of the electric vehicle, the electric vehicle sends, to the liquid cooling device connected to the liquid cooling charging connector 310, a packet used to request a desired flow rate of the coolant. The liquid cooling device may transmit the coolant to the electric vehicle at the desired flow rate of the coolant requested by the electric vehicle. When the liquid supply plug 312a is well connected to the liquid supply pipeline 3123, a flow rate of the coolant transmitted to the power battery is basically equal to a flow rate of the coolant provided by the liquid cooling device. Therefore, when the electric vehicle is charged at high power, the coolant transmitted through the liquid cooling charging connector can meet a heat dissipation requirement of the electric vehicle during high-power charging. When the connection between the liquid supply plug 312a and the liquid supply pipeline 3123 becomes loose, the flow rate of the coolant transmitted to the power battery is less than the flow rate of the coolant provided by the liquid cooling device. If the electric vehicle is still charged at high power, the coolant transmitted to the power battery cannot meet the heat dissipation requirement of the power battery during high-power charging. As a result, the power battery generates a large amount of heat. In severe cases, the power battery may be damaged and a charging accident may occur. If the electric vehicle is charged at low power, high-power charging of the electric vehicle cannot be met. As a result, a charging speed is low, and user experience is reduced. Therefore, in this application, it is designed that the liquid supply plug 312a is connected to the liquid supply pipeline 3123 through the fluid connector. This can ensure normal high-power charging of the electric vehicle, improve user experience, and further avoid damage to the power battery and a charging accident.

Similarly, the connection between the liquid cooling socket 322 and the liquid cooling pipeline may also become loose, resulting in a liquid leakage phenomenon. Therefore, in an embodiment, the liquid inlet socket 322a is connected to the power battery through the liquid inlet pipeline 3223, and the liquid outlet socket 322b is connected to the power battery through the liquid outlet pipeline 3224. The liquid cooling connector 320 further includes two fluid connectors. The liquid inlet socket 322a is connected to the liquid inlet pipeline 3223 through one of the fluid connectors, and the liquid outlet socket 322b is connected to the liquid outlet pipeline 3224 through the other fluid connector.

In this embodiment of this application, for the liquid cooling connector 320, the liquid inlet socket 322a is connected to the liquid inlet pipeline 3223 through one fluid connector. The one fluid connector is the fluid inlet connector 3221 in FIG. 3. The one fluid connector may fasten the connection between the liquid inlet socket 322a and the liquid inlet pipeline 3223, to avoid a liquid leakage phenomenon that may occur when the liquid inlet socket 322a is directly connected to the liquid inlet pipeline 3223. The liquid outlet socket 322b is connected to the liquid outlet pipeline 3224 through the other fluid connector. The other fluid connector may fasten the connection between the liquid outlet socket 322b and the liquid outlet pipeline 3224, to avoid a liquid leakage phenomenon that may occur when the liquid outlet socket 322b is directly connected to the liquid outlet pipeline 3224.

The two fluid connectors of the liquid cooling connector may also be connection nuts, washers, or the like.

It should be understood that disposing the fluid connector of the liquid cooling connector 320 facilitates normal high-power charging of the electric vehicle, and avoids damage to the power battery and a charging accident. Specifically, when the liquid cooling charging connector 310 is plugged into the liquid cooling connector 320 of the electric vehicle, the electric vehicle sends, to the liquid cooling device connected to the liquid cooling charging connector 310, a packet used to request a desired flow rate of the coolant. The liquid cooling device may transmit the coolant to the electric vehicle at the desired flow rate of the coolant requested by the electric vehicle. When the liquid inlet socket 322a is well connected to the liquid inlet pipeline 3223, a flow rate of the coolant transmitted to the power battery is basically equal to a flow rate of the coolant provided by the liquid cooling device. Therefore, when the electric vehicle is charged at high power, the coolant transmitted through the liquid cooling charging connector can meet a heat dissipation requirement of the electric vehicle during high-power charging. When the connection between the liquid inlet socket 322a and the liquid inlet pipeline 3223 becomes loose, the flow rate of the coolant transmitted to the power battery is less than the flow rate of the coolant provided by the liquid cooling device. If the electric vehicle is still charged at high power, the coolant transmitted to the power battery cannot meet the heat dissipation requirement of the power battery during high-power charging. As a result, the power battery generates a large amount of heat. In severe cases, the power battery may be damaged and a charging accident may occur. If the electric vehicle is charged at low power, high-power charging of the electric vehicle cannot be met. As a result, a charging speed is low, and user experience is reduced. Therefore, in this application, it is designed that the liquid inlet socket 322a is connected to the liquid inlet pipeline 3223 through the fluid connector. This can facilitate normal high-power charging of the electric vehicle, improve user experience, and further avoid damage to the power battery and a charging accident.

The following describes a length relationship between each plug of the liquid cooling charging connector 310 and each socket of the liquid cooling connector 320.

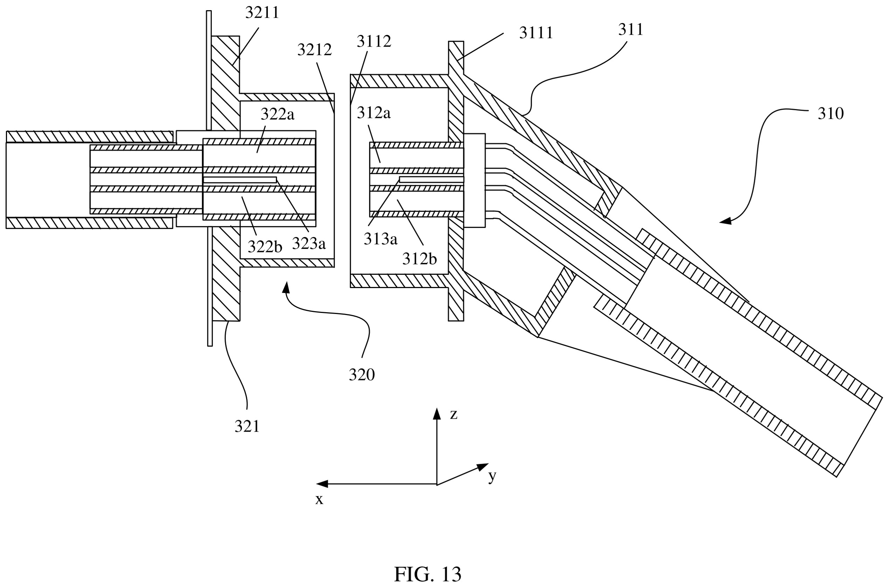

In an embodiment, refer to FIG. 13. A distance between one end of the liquid cooling plug 312 and the bottom plate 3111 is greater than a distance between one end of the connection confirm plug 313a and the bottom plate 3111, or a distance between one end of the liquid cooling plug 312 and an end face 3112 that is of the accommodation cavity and that is away from the bottom plate 3111 is less than a distance between one end of the connection confirm plug 313a and an end face 3112 that is of the accommodation cavity and that is away from the bottom plate 3111. Both the one end of the liquid cooling plug 312 and the one end of the connection confirm plug 313a are exposed outside the housing.

In this embodiment of this application, both the one end of the liquid cooling plug 312 and the one end of the connection confirm plug 313a are exposed outside the housing, and each of the one end of the liquid cooling plug 312 and the one end of the connection confirm plug 313a may be understood as one end away from the bottom plate 3111, namely, one end close to the liquid cooling connector 320.

In this embodiment of this application, it is designed that the distance between the one end of the liquid cooling plug 312 and the bottom plate 3111 is greater than the distance between the one end of the connection confirm plug 313a and the bottom plate 3111, or the distance between the one end of the liquid cooling plug 312 and the end face 3112 that is of the accommodation cavity and that is away from the bottom plate 3111 is less than the distance between the one end of the connection confirm plug 313a and the end face 3112 that is of the accommodation cavity and that is away from the bottom plate 3111. Therefore, when the liquid cooling charging connector 310 is plugged into the liquid cooling connector 320, the liquid cooling plug 312 is preferably connected to the liquid cooling socket 322, and then the connection confirm plug 313a is connected to the connection confirm socket 323a. This helps the liquid cooling device outside the vehicle normally dissipate heat for the power battery of the electric vehicle when the charging pile charges the electric vehicle at high power, to meet a heat dissipation requirement for high-power charging of the power battery.

A reason is as follows: If the connection confirm plug 313a is first connected to the connection confirm socket 323a, and then the liquid cooling plug 312 is connected to the liquid cooling socket 322, the connection confirm plug 313a may be connected to the connection confirm socket 323a, but the liquid cooling plug 312 is not connected to the liquid cooling socket 322. As a result, the liquid cooling device incorrectly determines that the liquid cooling plug 312 and the liquid cooling socket 322 that are not successfully connected to each other are in a connected state, and liquid leakage easily occurs when the liquid cooling device transmits the coolant to the electric vehicle. Therefore, in this embodiment of this application, it is designed that the liquid cooling plug 312 is first connected to the liquid cooling socket 322, and then the connection confirm plug 313a is connected to the connection confirm socket 323a. This can avoid liquid leakage caused by incorrectly determining a state of the connection between the liquid cooling plug 312 and the liquid cooling socket 322, and facilitate normal high-power charging of the electric vehicle, thereby improving user experience.

In an embodiment, still refer to FIG. 13. A distance between one end of the liquid cooling socket 322 and the bottom plate 3211 is greater than a distance between one end of the connection confirm socket 323a and the bottom plate 3211, or a distance between one end of the liquid cooling socket 322 and an end face 3212 that is of the accommodation cavity and that is away from the bottom plate 3211 is less than a distance between one end of the connection confirm socket 323a and an end face 3212 that is of the accommodation cavity and that is away from the bottom plate 3211. Both the one end of the liquid cooling socket 322 and the one end of the connection confirm socket 323a are exposed outside the housing.

In this embodiment of this application, both the one end of the liquid cooling socket 322 and the one end of the connection confirm socket 323a are exposed outside the housing, and each of the one end of the liquid cooling socket 322 and the one end of the connection confirm socket 323a may be understood as one end away from the bottom plate 3211, namely, one end close to the liquid cooling charging connector 310.

In this application, it is designed that the distance between the one end of the liquid cooling socket 322 and the bottom plate 3211 is greater than the distance between the one end of the connection confirm socket 323a and the bottom plate 3211, or the distance between the one end of the liquid cooling socket 322 and the end face 3212 that is of the accommodation cavity and that is away from the bottom plate 3211 is less than the distance between the one end of the connection confirm socket 323a and the end face 3212 that is of the accommodation cavity and that is away from the bottom plate 3211. Therefore, when the liquid cooling charging connector 310 is plugged into the liquid cooling connector 320, the liquid cooling socket 322 is preferably connected to the liquid cooling plug 312, and then the connection confirm plug 313a is connected to the connection confirm socket 323a. This helps the liquid cooling device outside the vehicle normally dissipate heat for the power battery of the electric vehicle when the charging pile charges the electric vehicle at high power, to meet a heat dissipation requirement for high-power charging of the power battery.

A reason is as follows: If the connection confirm plug 313a is first connected to the connection confirm socket 323a, and then the liquid cooling plug 312 is connected to the liquid cooling socket 322, the connection confirm plug 313a may be connected to the connection confirm socket 323a, but the liquid cooling plug 312 is not connected to the liquid cooling socket 322. As a result, the electric vehicle incorrectly determines that the liquid cooling socket 322 and the liquid cooling plug 312 that are not successfully connected to each other are in a connected state, and liquid leakage easily occurs when the liquid cooling device transmits the coolant to the electric vehicle. Therefore, in this embodiment of this application, it is designed that the liquid cooling plug 312 is first connected to the liquid cooling socket 322, and then the connection confirm plug 313a is connected to the connection confirm socket 323a. This can avoid liquid leakage caused by incorrectly determining the state of the connection between the liquid cooling socket 322 and the liquid cooling plug 312, and facilitate normal high-power charging of the electric vehicle, thereby improving user experience.

It should be noted that the end face 3112 that is of the accommodation cavity and that is away from the bottom plate 3111 in the foregoing embodiment may be understood as an end face that is of the liquid cooling charging connector 310 and that is first in contact with the liquid cooling connector 320 in the process in which the liquid cooling charging connector 310 is plugged into the liquid cooling connector 320. Similarly, the end face 3212 that is of the accommodation cavity and that is away from the bottom plate 3211 may be understood as an end face that is of the liquid cooling connector 320 and that is first in contact with the liquid cooling charging connector 310 in the process in which the liquid cooling charging connector 310 is plugged into the liquid cooling connector 320.

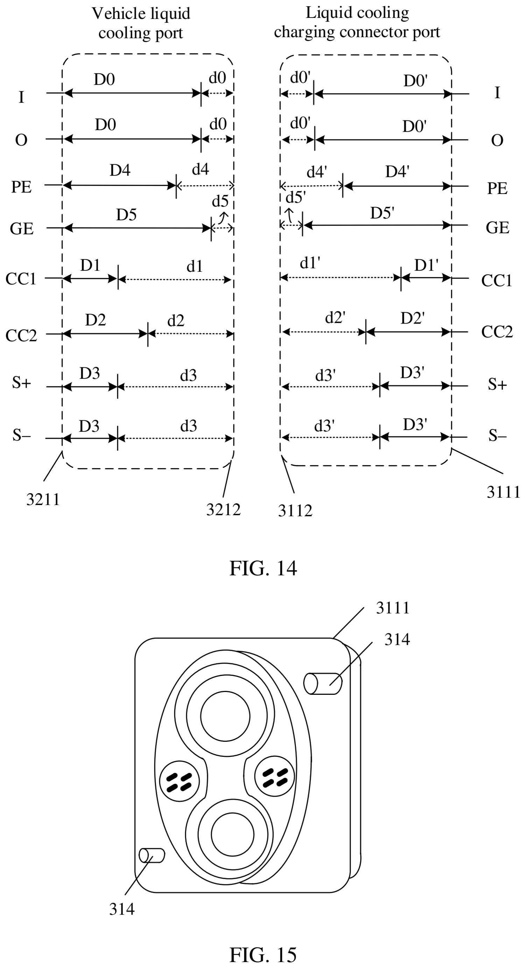

FIG. 14 is a diagram of an interface of a liquid cooling charging connector port of the liquid cooling charging connector 310 and a vehicle liquid cooling port of the liquid cooling connector of the electric vehicle according to an embodiment of this application.

A plug I and a plug O in the liquid cooling charging connector port are the liquid supply plug 312a and the liquid outlet plug 312b in the liquid cooling plug 312 shown in FIG. 3, a plug GE in the liquid cooling charging connector port is the foregoing guide structure 314, a plug CC1 and a plug CC2 in the liquid cooling charging connector port are the connection confirm plugs 313a mentioned above, a plug S+ and a plug S- in the liquid cooling charging connector port are the following communication plug, and a plug PE in the liquid cooling charging connector port is referred to as a ground plug.

A socket I and a socket O in the vehicle liquid cooling port are the liquid inlet socket 322a and the liquid outlet socket 322b in the liquid cooling socket 322 shown in FIG. 3, a socket GE in the vehicle liquid cooling port is the guide structure 324 mentioned above, a socket CC1 and a socket CC2 in the vehicle liquid cooling port are the connection confirm sockets 323a mentioned above, and a socket PE in the vehicle liquid cooling port is a ground socket.

The liquid cooling charging connector 310 is used as an example. A distance between one end of the liquid cooling plug 312 and the bottom plate 3111 is D0', and distances between the bottom plate 3111 and ends of the connection confirm plugs 313a are D1' and D2'. It can be seen from the figure that DO'>D1' and D0'>D2'. A distance between one end of the liquid cooling plug 312 and an end face that is of the accommodation cavity and that is away from the bottom plate 3111 is d0', and distances between the end face that is of the accommodation cavity and that is away from the bottom plate 3111 and ends of the connection confirm plugs 313a are d1' and d2'. It can be seen from the figure that d0'<d1' and d0'<d2'.

The liquid cooling connector 320 is used as an example. A distance between one end of the liquid cooling socket 322 and the bottom plate 3211 is D0, and distances between the bottom plate 3211 and ends of the connection confirm sockets 323a are D1 and D2. It can be seen from the figure that DO>D1 and DO>D2. A distance between one end of the liquid cooling socket 322 and an end face that is of the accommodation cavity and that is away from the bottom plate 3211 is d0, and distances between the end face that is of the accommodation cavity and that is away from the bottom plate 3211 and ends of the connection confirm sockets 323a are d1 and d2. It can be seen from the figure that d0<d1 and d0<d2.

Based on the foregoing design, in the process in which the liquid cooling charging connector 310 is plugged into the liquid cooling connector 320, the liquid cooling socket 322 is preferably connected to the liquid cooling plug 312, and then the connection confirm plug 313a is connected to the connection confirm socket 323a. This can avoid liquid leakage caused by incorrectly determining the state of the connection between the liquid cooling socket 322 and the liquid cooling plug 312, can ensure normal heat dissipation of the liquid cooling device for the power battery of the electric vehicle, and can further ensure normal high-power charging of the electric vehicle, thereby improving user experience.

The length relationship between the liquid cooling plug 312 and the connection confirm plug 313a and the length relationship between the liquid cooling socket 322 and the connection confirm socket 323a are described above. In an embodiment, the connection confirm plugs 313a may include two connection confirm plugs, for example, a first connection confirm plug and a second connection confirm plug; and the connection confirm sockets 323a may also include two connection confirm sockets, for example, a first connection confirm socket and a second connection confirm socket. The following describes length relationships between the two connection confirm plugs and between the two connection confirm sockets.

In this embodiment of this application, the first connection confirm plug may be CC1, and the second connection confirm plug may be CC2. Alternatively, the first connection confirm plug may be CC2, and the second connection confirm plug may be CC1.

For example, the first connection confirm plug is CC1, and the second connection confirm plug is CC2. A distance between one end of the first connection confirm plug CC1 and the bottom plate 3111 is less than a distance between one end of the second connection confirm plug CC2 and the bottom plate 3111, or a distance between one end of the first connection confirm plug CC1 and the end face 3112 that is of the accommodation cavity and that is away from the bottom plate 3111 is greater than a distance between one end of the second connection confirm plug CC2 and the end face 3112 that is of the accommodation cavity and that is away from the bottom plate 3111.

In this embodiment of this application, the liquid cooling device may determine the state of the connection between the liquid cooling socket 322 and the liquid cooling plug 312 based on the first connection confirm plug (plug CC1) and the first connection confirm socket (socket CC1). Because d1'>d2', in the process in which the liquid cooling charging connector 310 is plugged into the liquid cooling connector 320, the second liquid cooling connection confirm plug is first connected to the second liquid cooling connection confirm socket, and then the first liquid cooling connection confirm plug is connected to the first liquid cooling connection confirm socket. It is equivalent to that the liquid cooling device finally confirms a complete connection between the liquid cooling socket and the liquid cooling plug. This helps shorten charging start duration, and can improve charging start efficiency.

A reason is as follows: If the first connection confirm plug is first connected to the first liquid cooling connection confirm socket, and then the second connection confirm plug is connected to the second liquid cooling connection confirm socket, the electric vehicle finally confirms a complete connection between the liquid cooling socket 322 and the liquid cooling plug 312. Only after the second connection confirm plug is connected to the second connection confirm socket, the electric vehicle performs a series of preparations before charging, such as wake-up of a battery management system. After the series of preparations before charging are completed, the electric vehicle sends a coolant request packet to the charging pile to prepare for entering a charging phase. In this case, it is equivalent that the liquid cooling device confirms the connection between the liquid cooling socket and the liquid cooling plug prior to the electric vehicle. After the electric vehicle confirms the connection between the liquid cooling socket and the liquid cooling plug, the electric vehicle performs a series of preparations before charging. However, the series of preparations occupy specific duration, resulting in long charging start duration and low charging start efficiency.

If the second connection confirm plug is first connected to the second connection confirm socket, and then the first connection confirm plug is connected to the first connection confirm socket, the liquid cooling device finally confirms a complete connection between the liquid cooling socket and the liquid cooling plug. When the second connection confirm plug is connected to the second connection confirm socket, but the first connection confirm plug is not connected to the first connection confirm socket, the electric vehicle may perform a series of preparations before charging, such as wake-up of the battery management system. When the first connection confirm plug is connected to the first connection confirm socket, the liquid cooling device considers that the liquid cooling plug is successfully connected to the liquid cooling socket, and therefore can transmit the coolant to the electric vehicle. In this case, it is equivalent that the electric vehicle confirms the connection between the liquid cooling socket and the liquid cooling plug prior to the liquid cooling device. After the electric vehicle confirms the connection between the liquid cooling socket 322 and the liquid cooling plug 312, the electric vehicle may perform a series of preparations before charging, and meanwhile, the liquid cooling device may also confirm the connection between the liquid cooling socket 322 and the liquid cooling plug 312. It is equivalent that the series of preparations before charging performed by the electric vehicle and confirmation of the connection between the liquid cooling socket 322 and the liquid cooling plug 312 performed by the liquid cooling device may be synchronously performed. Therefore, this design in this application helps shorten charging start duration, and can improve charging start efficiency.

Still refer to FIG. 14. The distance between the one end of the first connection confirm plug CC1 and the bottom plate 3111 is D1', and the distance between the one end of the second connection confirm plug CC2 and the bottom plate 3111 is D2'. It can be seen from the figure that D1'<D2'. The distance between the one end of the first connection confirm plug CC1 and the end face 3112 that is of the accommodation cavity and that is away from the bottom plate 3111 is d1', and the distance between the one end of the second connection confirm plug CC2 and the end face 3112 that is of the accommodation cavity and that is away from the bottom plate 3111 is d2'. It can be seen from the figure that d1'>d2'.

In this embodiment of this application, the first connection confirm socket may be CC1, and the second connection confirm socket may be CC2. Alternatively, the first connection confirm socket may be CC2, and the second connection confirm socket may be CC1.

For example, the first connection confirm socket may be CC1, and the second connection confirm socket may be CC2. A distance between one end of the first connection confirm socket CC1 and the bottom plate 3211 is less than a distance between one end of the second connection confirm socket CC2 and the bottom plate 3211, or a distance between one end of the first connection confirm socket CC1 and the end face 3212 that is of the accommodation cavity and that is away from the bottom plate 3211 is greater than a distance between one end of the second connection confirm socket CC2 and the end face 3212 that is of the accommodation cavity and that is away from the bottom plate 3211.

Refer to FIG. 14. The distance between the one end of the first connection confirm socket CC1 and the bottom plate 3211 is D1, and the distance between the one end of the second connection confirm socket CC2 and the bottom plate 3211 is D2. It can be seen from the figure that D1<D2. The distance between the one end of the first connection confirm socket CC1 and the end face 3212 that is of the accommodation cavity and that is away from the bottom plate 3211 is d1, and the distance between the one end of the second connection confirm socket CC2 and the end face 3212 that is of the accommodation cavity and that is away from the bottom plate 3211 is d2. It can be seen from the figure that d1>d2.

In this embodiment of this application, the electric vehicle determines the state of the connection between the liquid cooling socket 322 and the liquid cooling plug 312 based on the second connection confirm plug (plug CC2) and the second connection confirm socket (socket CC2). Because d1>d2 and d1'>d2', in the process in which the liquid cooling charging connector 310 is plugged into the liquid cooling connector 320, the second liquid cooling connection confirm plug is first connected to the second liquid cooling connection confirm socket, and then the first liquid cooling connection confirm plug is connected to the first liquid cooling connection confirm socket. It is equivalent to that the liquid cooling device instead of the electric vehicle finally confirms the complete connection between the liquid cooling socket and the liquid cooling plug. This helps shorten charging start duration, and can improve charging start efficiency. For a specific reason, refer to the related descriptions of the liquid cooling device. Details are not described herein again.

It should be understood that, when the first connection confirm plug is a plug CC2, the second connection confirm plug is a plug CC1, the first connection confirm socket is a socket CC2, and the second connection confirm socket is a socket CC1, the liquid cooling device may determine the state of the connection between the liquid cooling socket and the liquid cooling plug based on the second connection confirm plug (namely, the plug CC1) and the second connection confirm socket (namely, the socket CC1), and the electric vehicle may determine the state of the connection between the liquid cooling socket and the liquid cooling plug based on the first connection confirm plug (namely, the plug CC2) and the first connection confirm socket (namely, the socket CC2).

It may be understood that the foregoing design of the distance between each socket and each plug is merely an example, and may be flexibly adjusted based on an actual production and design requirement. For example, in some other embodiments, the distance d1 between the one end of the first connection confirm socket (socket CC1) and the end face 3212 that is of the accommodation cavity and that is away from the bottom plate 3211 is equal to the distance d2 between an end face of the second connection confirm socket (socket CC2) and the end face 3212 that is of the accommodation cavity and that is away from the bottom plate 3211; and the distance d1' between the one end of the first connection confirm plug (plug CC1) and the end face 3112 that is of the accommodation cavity and that is away from the bottom plate 3111 is greater than the distance d2' between an end face of the second connection confirm plug (plug CC2) and the end face 3112 that is of the accommodation cavity and that is away from the bottom plate 3111. That is, d1=d2, and d1'>d2'. Based on the foregoing design, in the process in which the liquid cooling charging connector 310 is connected to the liquid cooling connector 320, the second connection confirm plug may also be first connected to the second connection confirm socket, and then the first connection confirm plug is connected to the first connection confirm socket.

Alternatively, the distance d1 between an end face of the first connection confirm socket (socket CC1) and the end face 3212 that is of the accommodation cavity and that is away from the bottom plate 3211 is greater than the distance d2 between an end face of the second connection confirm socket (socket CC2) and the end face 3212 that is of the accommodation cavity and that is away from the bottom plate 3211; and the distance d1' between an end face of the first connection confirm plug (plug CC1) and the end face 3112 that is of the accommodation cavity and that is away from the bottom plate 3111 is equal to the distance d2' between an end face of the second connection confirm plug (plug CC2) and the end face 3112 that is of the accommodation cavity and that is away from the bottom plate 3111. That is, d1>d2, and d1'=d2'. Based on the foregoing design, in the process in which the liquid cooling charging connector 310 is connected to the liquid cooling connector 320, the second connection confirm plug may also be first connected to the second connection confirm socket, and then the first connection confirm plug is connected to the first connection confirm socket.

In an embodiment, refer to FIG. 5. The electric plug further includes communication plugs 313b. The communication plug 313b is configured to connect to a communication socket of the electric vehicle. The communication plug 313b is the following communication plug S+ or S-.

A distance between one end of the communication plug S+ or S- and the bottom plate 3111 is greater than the distance between the one end of the first connection confirm plug CC1 and the bottom plate 3111, and the distance between the one end of the communication plug S+ or S- and the bottom plate 3111 is less than the distance between the one end of the second connection confirm plug CC2 and the bottom plate 3111; or a distance between one end of the communication plug S+ or S- and the end face 3112 that is of the accommodation cavity and that is away from the bottom plate 3111 is less than the distance between the one end of the first connection confirm plug CC1 and the end face that is of the accommodation cavity and that is away from the bottom plate 3111, and the distance between the one end of the communication plug S+ or S- and the end face that is of the accommodation cavity and that is away from the bottom plate 3111 is greater than the distance between the one end of the second connection confirm plug CC2 and the end face 3112 that is of the accommodation cavity and that is away from the bottom plate 3111. The one end of the communication plug S+ or S- is exposed outside the housing.

Refer to FIG. 14. The distance between the one end of the communication plug S+ or S- and the bottom plate 3111 is D3', the distance between the one end of the first connection confirm plug CC1 and the bottom plate 3111 is D1', and the distance between the one end of the second connection confirm plug CC2 and the bottom plate 3111 is D2'. It can be seen from the figure that D3'>D1' and D3'<D2'. The distance between the one end of the communication plug S+ or S- and the end face that is of the accommodation cavity and that is away from the bottom plate 3111 is d3', the distance between the one end of the first connection confirm plug CC1 and the end face that is of the accommodation cavity and that is away from the bottom plate 3111 is d1', and the distance between the one end of the second connection confirm plug CC2 and the end face that is of the accommodation cavity and that is away from the bottom plate 3111 is d2'. It can be seen from the figure that d3'<d1' and d3'>d2'.

In this embodiment of this application, because D3'>D1' and D3'<D2', in the process in which the liquid cooling charging connector is plugged into the liquid cooling connector, the second connection confirm plug is first connected to the second connection confirm socket, then the communication plugs S+ and S- are connected to communication sockets S+ and S-, and finally the first connection confirm plug is connected to the first connection confirm socket. This design helps further shorten the charging start duration, and can improve the charging start efficiency.

A reason is as follows: If the two connection confirm sockets are first connected to the corresponding connection confirm plugs, and then the communication plugs S+ and S- are connected to the communication sockets S+ and S-, the liquid cooling device and the electric vehicle can send packets to each other through the communication plugs S+ and S- and the communication sockets S+ and S- only after both the liquid cooling device and the electric vehicle confirm the connection between the liquid cooling socket 322 and the liquid cooling plug 312, and the coolant is transmitted only after the corresponding packets are sent, to prepare for entering the charging phase. In this application, it is designed that the second connection confirm plug is first connected to the second connection confirm socket, then the communication plugs S+ and S- are connected to the communication sockets S+ and S-, and finally the first connection confirm plug is connected to the first connection confirm socket. In this way, after the electric vehicle confirms the connection between the liquid cooling socket 322 and the liquid cooling plug 312, the liquid cooling device and the electric vehicle can send packets to each other when the communication plugs S+ and S- are connected to the communication sockets S+ and S-, and the coolant can be transmitted when the liquid cooling device confirms the connection between the liquid cooling socket 322 and the liquid cooling plug 312, to prepare for entering the charging phase. This helps shorten the charging start duration, and can improve the charging start efficiency.

In addition, in this embodiment of this application, the communication plugs S+ and S- and the connection confirm plug 313a are disposed in a same accommodation cavity, to reduce a quantity of accommodation cavities. This can simplify a design, and reduce processing complexity.

In an embodiment, refer to FIG. 6. The electric socket further includes communication sockets 323b. The communication socket 323b is configured to connect to a communication plug of the liquid cooling charging connector. The communication socket 323b is the following communication socket S+ or S-.

A distance between one end of the communication socket S+ or S- and the bottom plate 3211 is equal to the distance between the one end of the first connection confirm socket CC1 and the bottom plate 3211, or a distance between one end of the communication socket S+ or S- and the end face 3212 that is of the accommodation cavity and that is away from the bottom plate 3211 is equal to the distance between the one end of the first connection confirm socket CC1 and the end face 3212 that is of the accommodation cavity and that is away from the bottom plate 3211. The one end of the communication socket S+ or S- is exposed outside the housing.

Refer to FIG. 14. The distance between the one end of the communication socket S+ or S- and the bottom plate 3211 is D3, the distance between the one end of the first connection confirm socket CC1 and the bottom plate 3211 is D1, and D3=D1. The distance between the one end of the communication socket S+ or S- and the end face 3212 that is of the accommodation cavity and that is away from the bottom plate 3211 is d3, the distance between the one end of the first connection confirm socket CC1 and the end face 3212 that is of the accommodation cavity and that is away from the bottom plate 3211 is d1, and d3=d1.

In this embodiment of this application, because D3=D1 and D3<D2, in the process in which the liquid cooling charging connector is plugged into the liquid cooling connector, the second connection confirm plug is first connected to the second connection confirm socket, then the communication plugs S+ and S- are connected to the communication sockets S+ and S-, and finally the first connection confirm plug is connected to the first connection confirm socket. This design helps further shorten the charging start duration, and can improve the charging start efficiency. For a specific reason, refer to the related descriptions of the liquid cooling charging connector. Details are not described again.

It should be noted that, in this application, it is designed that the distance between the one end of the communication socket S+ or S- and the bottom plate 3211 is equal to the distance between the one end of the first connection confirm socket CC1 and the bottom plate 3211, to reduce a size of the liquid cooling connector 320. This facilitates integration of the liquid cooling connector 320, and facilitates mounting the liquid cooling connector 320 on the electric vehicle.

In addition, in this embodiment of this application, the communication sockets S+ and S- and the connection confirm socket 323a are disposed in a same accommodation cavity, to reduce a quantity of accommodation cavities. This can simplify a design, and reduce processing complexity.

In an embodiment, refer to FIG. 5. The electric plug further includes a ground plug 313c. The ground plug 313c is configured to connect to a ground socket of the electric vehicle. The ground plug 313c is the following ground plug PE.

A distance between one end of the ground plug PE and the bottom plate 3111 is less than the distance between the one end of the liquid cooling plug 312 and the bottom plate 3111, and the distance between the one end of the ground plug PE and the bottom plate 3111 is greater than the distance between the one end of the connection confirm plug 313a and the bottom plate 3111; or a distance between one end of the ground plug PE and the end face 3112 that is of the accommodation cavity and that is away from the bottom plate 3111 is greater than the distance between the one end of the liquid cooling plug 312 and the end face that is of the accommodation cavity and that is away from the bottom plate 3111, and the distance between the one end of the ground plug PE and the end face that is of the accommodation cavity and that is away from the bottom plate 3111 is less than the distance between the one end of the connection confirm plug 313a and the end face 3112 that is of the accommodation cavity and that is away from the bottom plate 3111. The one end of the ground plug PE is exposed outside the housing.

Refer to FIG. 14. The distance between the one end of the ground plug PE and the bottom plate 3111 is D4', the distance between the one end of the liquid cooling plug 312 and the bottom plate 3111 is D0', the distances between the bottom plate 3111 and the ends of the connection confirm plugs 313a are D1' and D2', D4'<D0', D4'>D2', and D4'>D1'. The distance between the one end of the ground plug PE and the end face 3112 that is of the accommodation cavity and that is away from the bottom plate 3111 is d4', the distance between the one end of the liquid cooling plug 312 and the end face that is of the accommodation cavity and that is away from the bottom plate 3111 is d0', the distances between the end face 3112 that is of the accommodation cavity and that is away from the bottom plate 3111 and the ends of the connection confirm plugs 313a are d1' and d2', d4'>d0', d4'<d1', and d4'<d2'.

In this embodiment of this application, because D4'<D0', D4'>D2', and D4'>D1', in the process in which the liquid cooling charging connector 310 is plugged into the liquid cooling connector 320, the liquid cooling plug 312 is first connected to the liquid cooling socket 322, then the ground plug PE is connected to the ground socket PE, and finally the connection confirm plugs CC1 and CC2 are connected to the connection confirm sockets CC1 and CC2. This design helps the liquid cooling device accurately determine the state of the connection between the liquid cooling plug 312 and the liquid cooling socket 322 based on the connection confirm plugs CC1 and CC2 and the connection confirm sockets CC1 and CC2, can improve accuracy of determining the state of the connection between the liquid cooling plug and the liquid cooling socket by the liquid cooling device or the electric vehicle, and can further ensure normal high-power charging of the electric vehicle.

A reason is as follows: If it is designed that the connection confirm plugs CC1 and CC2 are first connected to the connection confirm sockets CC1 and CC2, and then the ground plug PE is connected to the ground socket PE, when the connection confirm plugs CC1 and CC2 are connected to the connection confirm sockets CC1 and CC2, but the ground plug PE is not connected to the ground socket PE, the connection confirm plugs CC1 and CC2, the connection confirm sockets CC1 and CC2, a connection confirm circuit connected to the connection confirm plugs CC1 and CC2, and a connection confirm circuit connected to the connection confirm sockets CC1 and CC2 do not form a path, and the voltage at the detection point in the connection confirm circuit does not change. The liquid cooling device considers that the liquid cooling plug is not successfully connected to the liquid cooling socket. However, the liquid cooling plug is actually successfully connected to the liquid cooling socket. As a result, the liquid cooling device incorrectly determines the state of the connection between the liquid cooling plug and the liquid cooling socket, affecting normal high-power charging of the electric vehicle. The electric vehicle or the liquid cooling device determines, based on a change of the voltage at the detection point in the connection confirm circuit until the ground plug is connected to the ground socket, that the liquid cooling plug is successfully connected to the liquid cooling socket. Although the liquid cooling device can transmit the coolant to the electric vehicle, this process prolongs duration for the liquid cooling device to determine the state of the connection between the liquid cooling plug and the liquid cooling socket, and results in low charging start efficiency. Therefore, in this application, it is designed that the connection between the ground plug PE and the ground socket PE is prior to the connection between the connection confirm plugs CC1 and CC2 and the connection confirm sockets CC1 and CC2. This helps the liquid cooling device accurately determine the state of the connection between the liquid cooling plug and the liquid cooling socket, improves accuracy of determining the state of the connection between the liquid cooling plug and the liquid cooling socket by the liquid cooling device, and further ensures normal high-power charging of the electric vehicle. In addition, this can also shorten the charging start duration, and improve the charging start efficiency.

In an embodiment, refer to FIG. 6. The electric socket further includes a ground socket 323c. The ground socket 323c is configured to connect to a ground plug of the liquid cooling charging connector. The ground socket 323c is the following ground socket PE.

A distance between one end of the ground socket PE and the bottom plate 3211 is less than the distance between the one end of the liquid cooling socket 322 and the bottom plate 3211, and the distance between the one end of the ground socket PE and the bottom plate 3211 is greater than the distance between the one end of the connection confirm socket 323a and the bottom plate 3211; or a distance between one end of the ground socket PE and the end face that is of the accommodation cavity and that is away from the bottom plate 3211 is greater than the distance between the one end of the liquid cooling socket 322 and the end face that is of the accommodation cavity and that is away from the bottom plate 3211, and the distance between the one end of the ground socket PE and the end face that is of the accommodation cavity and that is away from the bottom plate 3211 is less than the distance between the one end of the connection confirm socket 323a and the end face that is of the accommodation cavity and that is away from the bottom plate 3211. The one end of the ground socket PE is exposed outside the housing.

Refer to FIG. 14. The distance between the one end of the ground socket PE and the bottom plate 3211 is D4, the distance between the one end of the liquid cooling socket 322 and the bottom plate 3211 is D0, the distances between the bottom plate 3211 and the ends of the connection confirm sockets 323a are D1 and D2, D4<D0, D4>D2, and D4>D1. The distance between the one end of the ground socket PE and the end face 3212 that is of the accommodation cavity and that is away from the bottom plate 3211 is d4, the distance between the one end of the liquid cooling socket 322 and the end face that is of the accommodation cavity and that is away from the bottom plate 3211 is d0, the distances between the end face 3212 that is of the accommodation cavity and that is away from the bottom plate 3211 and the ends of the connection confirm sockets 323a are d1 and d2, d4>d0, d4<d1, and d4<d2.

In this embodiment of this application, because D4<D0, D4>D2, and D4>D1, in the process in which the liquid cooling charging connector 310 is plugged into the liquid cooling connector 320, the liquid cooling plug 312 is first connected to the liquid cooling socket 322, then the ground plug PE is connected to the ground socket PE, and finally the connection confirm plugs CC1 and CC2 are connected to the connection confirm sockets CC1 and CC2. This design helps the electric vehicle accurately determine the state of the connection between the liquid cooling plug 312 and the liquid cooling socket 322 based on the connection confirm plugs CC1 and CC2 and the connection confirm sockets CC1 and CC2, can improve accuracy of determining the state of the connection between the liquid cooling plug and the liquid cooling socket by the electric vehicle, and can further ensure normal high-power charging of the electric vehicle.

A reason is as follows: If it is designed that the connection confirm plugs CC1 and CC2 are first connected to the connection confirm sockets CC1 and CC2, and then the ground plug PE is connected to the ground socket PE, when the connection confirm plugs CC1 and CC2 are connected to the connection confirm sockets CC1 and CC2, but the ground plug PE is not connected to the ground socket PE, the connection confirm plugs CC1 and CC2, the connection confirm sockets CC1 and CC2, the connection confirm circuit connected to the connection confirm plugs CC1 and CC2, and the connection confirm circuit connected to the connection confirm sockets CC1 and CC2 do not form the path, and the voltage at the detection point in the connection confirm circuit does not change. The electric vehicle considers that the liquid cooling plug is not successfully connected to the liquid cooling socket. However, the liquid cooling plug is actually successfully connected to the liquid cooling socket. As a result, the electric vehicle incorrectly determines the state of the connection between the liquid cooling plug and the liquid cooling socket, affecting normal high-power charging of the electric vehicle. The electric vehicle determines, based on the change of the voltage at the detection point in the connection confirm circuit until the ground plug is connected to the ground socket, that the liquid cooling plug is successfully connected to the liquid cooling socket. Although the liquid cooling device can transmit the coolant to the electric vehicle, this process prolongs duration for the electric vehicle to determine the state of the connection between the liquid cooling plug and the liquid cooling socket, and results in low charging start efficiency. Therefore, in this application, it is designed that the connection between the ground plug PE and the ground socket PE is prior to the connection between the connection confirm plugs CC1 and CC2 and the connection confirm sockets CC1 and CC2. This helps the electric vehicle accurately determine the state of the connection between the liquid cooling plug and the liquid cooling socket, improves accuracy of determining the state of the connection between the liquid cooling plug and the liquid cooling socket by the electric vehicle, and further ensures normal high-power charging of the electric vehicle. In addition, this can also shorten the charging start duration, and improve the charging start efficiency.

It may be understood that the foregoing design of the distance between each socket and each plug is merely an example, and may be flexibly adjusted based on an actual production and design requirement. For example, in some other embodiments, the distance d1 between the one end of the first connection confirm socket (socket CC1) and the end face 3212 that is of the accommodation cavity and that is away from the bottom plate 3211 is equal to the distance d2 between an end face of the second connection confirm socket (socket CC2) and the end face 3212 that is of the accommodation cavity and that is away from the bottom plate 3211; and the distance d1' between the one end of the first connection confirm plug (plug CC1) and the end face 3112 that is of the accommodation cavity and that is away from the bottom plate 3111 is greater than the distance d2' between an end face of the second connection confirm plug (plug CC2) and the end face 3112 that is of the accommodation cavity and that is away from the bottom plate 3111. That is, d1=d2, and d1'>d2'. Based on the foregoing design, in the process in which the liquid cooling charging connector 310 is connected to the liquid cooling connector 320, the second connection confirm plug may also be first connected to the second connection confirm socket, and then the first connection confirm plug is connected to the first connection confirm socket.

Alternatively, the distance d1 between an end face of the first connection confirm socket (socket CC1) and the end face 3212 that is of the accommodation cavity and that is away from the bottom plate 3211 is greater than the distance d2 between an end face of the second connection confirm socket (socket CC2) and the end face 3212 that is of the accommodation cavity and that is away from the bottom plate 3211; and the distance d1' between an end face of the first connection confirm plug (plug CC1) and the end face 3112 that is of the accommodation cavity and that is away from the bottom plate 3111 is equal to the distance d2' between an end face of the second connection confirm plug (plug CC2) and the end face 3112 that is of the accommodation cavity and that is away from the bottom plate 3111. That is, d1>d2, and d1'=d2'. Based on the foregoing design, in the process in which the liquid cooling charging connector 310 is connected to the liquid cooling connector 320, the second connection confirm plug may also be first connected to the second connection confirm socket, and then the first connection confirm plug is connected to the first connection confirm socket.

In view of this, the length relationships between the plugs and the sockets are described above. In an embodiment, to help the user quickly and accurately insert the liquid cooling charging connector 310 into the liquid cooling connector 320, some guide structures may be disposed on the liquid cooling charging connector 310 and the liquid cooling connector 320. For details, refer to the following descriptions.

In an embodiment, as shown in FIG. 15, a guide structure in the liquid cooling charging connector 310 may be specifically a guide post 314. The bottom plate 3111 includes the guide post 314. The guide post 314 and the accommodation cavity are located on a same side of the bottom plate 3111. The guide post 314 is configured to plug into a guide hole of the electric vehicle. A distance between one end that is of the guide post 314 and that is away from the bottom plate 3111 and the bottom plate 3111 is greater than the distance between the one end of the liquid cooling plug 312 and the bottom plate 3111. The one end of the liquid cooling plug 312 is exposed outside the housing 311.

In this embodiment of this application, the guide post 314 of the liquid cooling charging connector 310 may assist the liquid cooling charging connector 310 in quickly and accurately plugging into the liquid cooling connector 320. Specifically, refer to FIG. 14. The distance between the one end that is of the guide post 314 and that is away from the bottom plate 3111 and the bottom plate 3111 is D5', the distance between the one end of the liquid cooling plug 312 and the bottom plate 3111 is D0', and D5'>D0'. Therefore, when the liquid cooling charging connector 310 is plugged into the liquid cooling connector 320, the guide post 314 of the liquid cooling charging connector 310 is first connected to the liquid cooling connector 320. In other words, compared with other plugs of the liquid cooling charging connector 310, for example, the liquid cooling plug 312 and the electric plug 313, the guide post 314 of the liquid cooling charging connector 310 is first connected to the liquid cooling connector 320. In this way, a position of the liquid cooling charging connector 310 basically corresponds to a position of the liquid cooling connector 320. This helps the user accurately plug the liquid cooling charging connector 310 into the liquid cooling connector 320 subsequently.

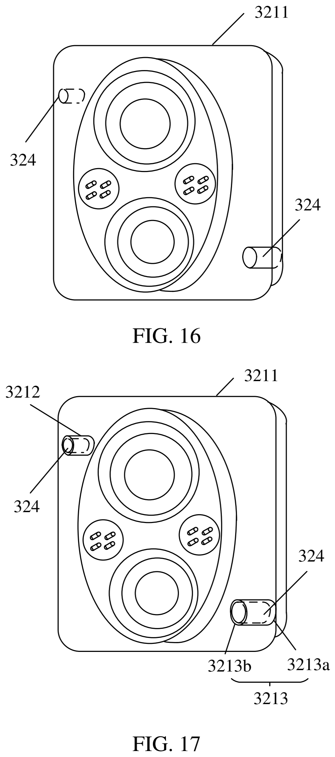

In an embodiment, as shown in FIG. 16, a guide structure in the liquid cooling connector 320 may be specifically a guide groove 324 or a guide hole 324. The bottom plate 3211 of the liquid cooling connector 320 includes the guide groove 324 or the guide hole 324. The guide groove 324 or the guide hole 324 is configured to accommodate the guide post 314 of the liquid cooling charging connector 310.

In this embodiment of this application, the guide hole 324 is used as an example. The guide hole 324 of the liquid cooling connector 320 may assist the liquid cooling charging connector 310 in quickly and accurately plugging into the liquid cooling connector 320. Specifically, when the liquid cooling charging connector 310 is plugged into the liquid cooling connector 320, the guide hole 324 of the liquid cooling connector 320 is first connected to the guide post 314 of the liquid cooling charging connector 310. In other words, compared with other sockets of the liquid cooling connector 320, for example, the liquid cooling socket 322 and the electric socket 323, the guide hole 324 of the liquid cooling connector 320 is first connected to the guide post 314 of the liquid cooling charging connector 310. In this way, the position of the liquid cooling connector 320 basically corresponds to the position of the liquid cooling charging connector 310. This helps the user accurately plug the liquid cooling charging connector 310 into the liquid cooling connector 320 subsequently.

It should be understood that a quantity of guide posts 314 of the liquid cooling charging connector 310 is equal to a quantity of guide holes 324 of the liquid cooling connector 320. For example, there are two guide holes 324 in FIG. 16 and two guide posts 314 in FIG. 15. In addition, positions of the guide holes 324 of the liquid cooling connector 320 correspond to positions of the guide posts 314 of the liquid cooling charging connector 310. For example, the guide holes 324 in FIG. 16 and the guide posts 314 in FIG. 15 are symmetrical about the z direction. In this way, the liquid cooling charging connector 310 can be accurately plugged into the liquid cooling connector 320.

It should be further understood that the quantity and the positions of the guide holes 324 shown in FIG. 16 are merely examples. In actual application, there may be more guide holes 324, or the guide holes 324 may be disposed at other positions. Similarly, the quantity and the positions of the guide posts 314 shown in FIG. 15 are merely examples. In actual application, there may be more guide posts 314, or the guide posts 314 may be disposed at other positions. This is not limited.

In an embodiment, as shown in FIG. 17, the bottom plate 3211 further includes a third protrusion structure 3213. The third protrusion structure 3213 and the accommodation cavity are located on a same side of the bottom plate 3211. The third protrusion structure 3213 includes two oppositely disposed ends 3213a and 3213b. One end 3213a in the two ends 3213a and 3213b of the third protrusion structure 3213 abuts against the bottom plate 3211. The third protrusion structure 3213 further includes a through hole. The through hole penetrates the third protrusion structure 3213 in a direction in which the two ends 3213a and 3213b of the third protrusion structure 3213 are arranged. A side wall of the through hole and a part that is of the bottom plate 3211 and that corresponds to the third protrusion structure 3213 jointly enclose the guide groove 324.

The diagram shown in FIG. 17 is basically consistent with the diagram shown in FIG. 16. A difference lies in that the guide groove 324 is formed in different manners. In the diagram shown in FIG. 16, the guide groove 324 is formed by depressing from a surface that is of the bottom plate 3211 and that is provided with the accommodation cavity to the inside of the bottom plate 3211. However, in the diagram shown in FIG. 17, the guide groove 324 is formed by depressing of the third protrusion structure 3213 toward the bottom plate 3211. In other words, in FIG. 16, the guide groove 324 is located in only the bottom plate 3211. In FIG. 17, the guide groove 324 is located in the third protrusion structure 3213 and the bottom plate 3211.

In the diagram shown in FIG. 17, the side wall of the through hole and the part that is of the bottom plate 3211 and that corresponds to the third protrusion structure 3213 jointly enclose the guide groove 324. Therefore, a requirement on a thickness of the bottom plate 3211 of the liquid cooling connector 320 is low. In other words, the bottom plate 3211 of the liquid cooling connector 320 may be designed as a thin plate, to reduce the size of the liquid cooling connector 320. This facilitates integration of the liquid cooling connector 320, and facilitates mounting the liquid cooling connector 320 on the electric vehicle.

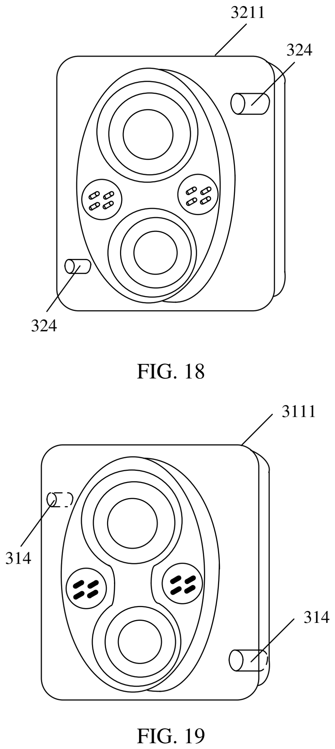

In another embodiment, as shown in FIG. 18, the liquid cooling connector 320 further includes a guide post 324. The guide post 324 and the accommodation cavity are located on the same side of the bottom plate 3211. The guide post 324 is configured to plug into a guide hole 314 of the liquid cooling charging connector 310. A distance between one end that is of the guide post 324 and that is away from the bottom plate 3211 and the bottom plate 3211 is greater than the distance between the one end of the liquid cooling socket 322 and the bottom plate 3211. The one end of the liquid cooling socket 322 is exposed outside the housing.

In this embodiment of this application, in the process in which the liquid cooling charging connector 310 is plugged into the liquid cooling connector 320, the guide post 324 of the liquid cooling connector 320 is first connected to the liquid cooling charging connector 310. This helps the user accurately plug the liquid cooling charging connector 310 into the liquid cooling connector 320 subsequently. Specifically, refer to FIG. 14. The distance between the one end that is of the guide post 324 and that is away from the bottom plate 3211 and the bottom plate 3211 is D5, the distance between the one end of the liquid cooling socket 322 and the bottom plate 3211 is D0, and D5>D0. Therefore, when the liquid cooling charging connector 310 is plugged into the liquid cooling connector 320, the guide post 324 of the liquid cooling connector 320 is first connected to the liquid cooling charging connector 310. In this way, the position of the liquid cooling connector 320 basically corresponds to the position of the liquid cooling charging connector 310. This helps the user accurately plug the liquid cooling charging connector 310 into the liquid cooling connector 320 subsequently.

As shown in FIG. 19, the bottom plate 3111 further includes a guide groove 314 or a guide hole 314, and the guide groove 314 or the guide hole 314 is configured to accommodate the guide post 324 of the electric vehicle.

In this embodiment of this application, the guide hole 314 is used as an example. In the process in which the liquid cooling charging connector 310 is plugged into the liquid cooling connector 320, the guide hole 314 of the liquid cooling charging connector 310 is first connected to the liquid cooling connector 320. This helps the user accurately plug the liquid cooling charging connector 310 into the liquid cooling connector 320 subsequently. Specifically, when the liquid cooling charging connector 310 is plugged into the liquid cooling connector 320, the guide hole 314 of the liquid cooling charging connector 310 is first connected to the guide post 324 of the liquid cooling connector 320. In this way, the position of the liquid cooling charging connector 310 basically corresponds to the position of the liquid cooling connector 320. This helps the user accurately plug the liquid cooling charging connector 310 into the liquid cooling connector 320 subsequently.

Similarly, a quantity of guide holes 314 of the liquid cooling charging connector 310 is equal to a quantity of guide posts 324 of the liquid cooling connector 320. For example, there are two guide posts 324 in FIG. 18 and two guide holes 314 in FIG. 19. In addition, positions of the guide holes 314 of the liquid cooling charging connector 310 correspond to positions of the guide posts 324 of the liquid cooling connector 320. For example, the guide holes 314 in FIG. 19 and the guide posts 324 in FIG. 18 are symmetrical about the z direction. In this way, the liquid cooling charging connector 310 can be accurately plugged into the liquid cooling connector 320.

It should be further understood that the quantity and the positions of the guide posts 324 shown in FIG. 18 are merely examples. In actual application, there may be more guide posts 324, or the guide posts 324 may be disposed at other positions. Correspondingly, the quantity and the positions of the guide holes 314 shown in FIG. 19 are merely examples. In actual application, there may be more guide holes 314, or the guide holes 314 may be disposed at other positions. This is not limited.

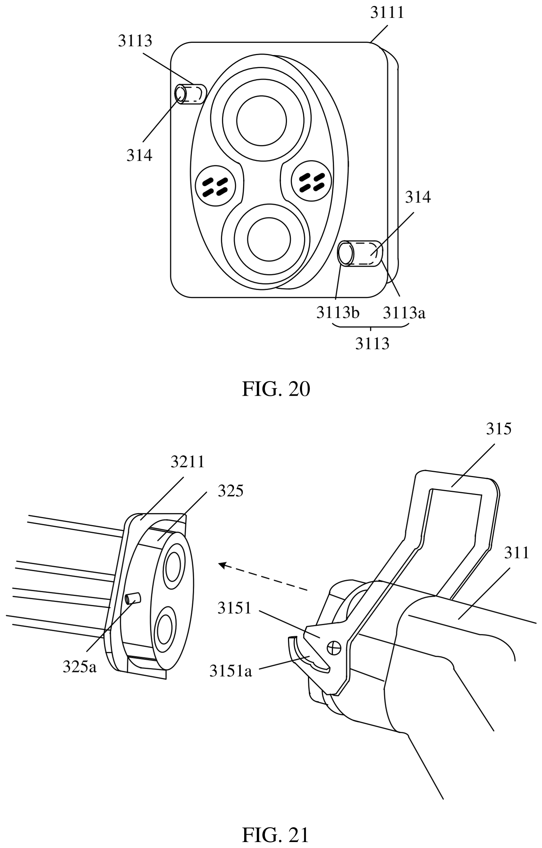

In an embodiment, as shown in FIG. 20, the bottom plate 3111 further includes a first protrusion structure 3113. The first protrusion structure 3113 and the accommodation cavity are located on the same side of the bottom plate 3111. The first protrusion structure 3113 includes two oppositely disposed ends 3113a and 3113b. One end 3113a in the two ends 3113a and 3113b of the first protrusion structure 3113 abuts against the bottom plate 3111. The first protrusion structure 3113 further includes a through hole. The through hole penetrates the first protrusion structure 3113 in a direction in which the two ends 3113a and 3113b of the first protrusion structure 3113 are arranged. A side wall of the through hole and a part that is of the bottom plate 3111 and that corresponds to the first protrusion structure 3113 jointly enclose the guide groove 314.

The diagram shown in FIG. 20 is basically consistent with the diagram shown in FIG. 19. A difference lies in that the guide groove 314 is formed in different manners. In the diagram shown in FIG. 19, the guide groove 314 is formed by depressing from a surface that is of the bottom plate 3111 and that is provided with the accommodation cavity to the inside of the bottom plate 3111. However, in the diagram shown in FIG. 20, the guide groove 314 is formed by depressing of the first protrusion structure 3113 toward the bottom plate 3111. In other words, in FIG. 19, the guide groove 314 is located in only the bottom plate 3111. In FIG. 20, the guide groove 314 is located in the first protrusion structure 3113 and the bottom plate 3111.

In the diagram shown in FIG. 20, the side wall of the through hole and the part that is of the bottom plate 3111 and that corresponds to the first protrusion structure 3113 jointly enclose the guide groove 314. Therefore, a requirement on a thickness of the bottom plate 3111 of the liquid cooling charging connector 310 is low. In other words, the bottom plate 3111 of the liquid cooling charging connector 310 may be designed as a thin plate, to reduce weight of the liquid cooling charging connector 310. This helps the user insert the liquid cooling charging connector 310 into the liquid cooling connector 320, thereby improving user experience.

The following describes the booster handle structure of the liquid cooling charging connector 310 and the two protrusion structures of the liquid cooling connector 320 with reference to FIG. 21.

In an embodiment, the liquid cooling charging connector 310 further includes the booster handle structure 315. The booster handle structure 315 is disposed around a part of an outer circumferential surface of the housing 311, and two ends 3151 and 3152 of the booster handle structure 315 are rotatably connected to the housing 311 (the figure shows only one end 3151, and does not show the other end 3152). Guide rail structures 3151a and 3152a that each have an opening at one end are disposed at the two ends 3151 and 3152 of the booster handle structure 315 respectively (the figure shows only the guide rail structure 3151a, and does not show the other guide rail structure 3152a).

In this embodiment of this application, in a direction in which the two ends 3151 and 3152 of the booster handle structure 315 are arranged, each guide rail structure penetrates an end part of one of the two ends, and the opening of each guide rail structure faces a direction away from a liquid cooling charging connector cable of the liquid cooling charging connector 310. Specifically, the guide rail structure 3151a penetrates an end portion of the one end 3151 in the direction in which the two ends 3151 and 3152 of the booster handle structure 315 are arranged, and the guide rail structure 3152a penetrates an end part of the other end 3152 in the direction in which the two ends 3151 and 3152 of the booster handle structure 315 are arranged. In addition, both the openings of the guide rail structures 3151a and 3152a face the direction away from the liquid cooling charging connector cable of the liquid cooling charging connector 310, that is, both the openings of the two guide rail structures 3151a and 3152a face the electric vehicle.

In an embodiment, the liquid cooling connector 320 further includes a fourth protrusion structure 325. The fourth protrusion structure 325 is disposed around the accommodation cavities. In a direction perpendicular to the gravity direction, the fourth protrusion structure 325 includes two oppositely disposed side walls, and each of the two side walls includes one fifth protrusion structure, for example, a fifth protrusion structure 325a or 325b (the figure shows only one fifth protrusion structure 325a, and does not show the other fifth protrusion structure 325b). Each fifth protrusion structure protrudes from a corresponding side wall in the direction perpendicular to the gravity direction.

In this embodiment of this application, the user may hold the booster handle structure 315 to rotate counterclockwise or clockwise, so that the booster handle structure 315 rotates around the housing 311. In the process in which the booster handle structure 315 rotates around the housing 311, the liquid cooling charging connector 310 moves toward the liquid cooling connector 320. To be specific, the liquid cooling charging connector 310 moves toward the liquid cooling connector 320 in a direction of a dashed-line arrow in the figure. In this way, the liquid cooling charging connector 310 can be more conveniently plugged into the liquid cooling connector 320. This saves force for the user to insert the liquid cooling charging connector 310 into the liquid cooling connector 320, thereby improving user experience.

In the process in which the liquid cooling charging connector 310 moves toward the liquid cooling connector 320 in the direction of the dashed-line arrow in the figure, the two fifth protrusion structures 325a and 325b of the liquid cooling connector 320 slide along corresponding guide rail structures respectively. For example, the fifth protrusion structure 325a slides along the guide rail structure 3151a, and the fifth protrusion structure 325b slides along the guide rail structure 3152a. When the plug of the liquid cooling charging connector 310 is connected to the corresponding socket of the liquid cooling connector 320, the two fifth protrusion structures 325a and 325b reach bottoms of the guide rail structure 3151a and the guide rail structure 3152a respectively.

It should be understood that a shape of the booster handle structure shown in the figure is merely an example, and the booster handle structure may alternatively be in another shape. A general principle is that as long as the user rotates the booster handle structure 315, and the liquid cooling charging connector 310 moves in the x direction toward the liquid cooling connector 320, the booster handle structure 315 is applicable to this application.

In specific implementation, a holding portion that is of the booster handle structure 315 and that is to be held by the user may be of a strip-shaped structure, and the holding portion may be provided with a groove, to fit a shape of a hand, thereby facilitating stable holding. In actual application, the booster handle structure 315 can rotate relative to the liquid cooling charging connector 310 within a specific angle range, to adjust a booster angle, so that the liquid cooling charging connector 310 is more conveniently plugged into the liquid cooling connector 320. In actual application, the user may hold the holding portion to exert acting force on the liquid cooling charging connector 310, for example, rotate the holding portion upward counterclockwise or rotate the holding portion downward clockwise, so that the liquid cooling charging connector 310 is plugged into the liquid cooling connector 320.

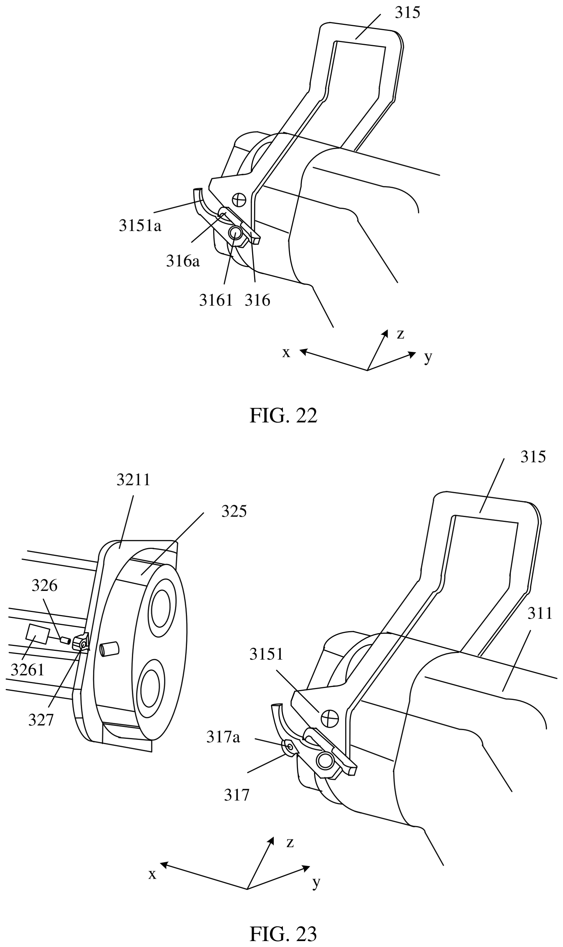

In an embodiment, as shown in FIG. 22, the liquid cooling charging connector 310 further includes a hooking member 316. The hooking member 316 is disposed in parallel with the booster handle structure 315 in the direction in which the two ends of the booster handle structure 315 are arranged, and the hooking member 316 is rotatably connected to the booster handle structure 315. The hooking member 316 includes a bending portion 316a, and the bending portion 316a is bent in a direction in which two oppositely disposed rail surfaces 3151a1 and 3151a2 of the guide rail structure 3151a are arranged.

In this embodiment of this application, the hooking member 316 is rotatably connected to the booster handle structure 315, and the hooking member 316 rotates clockwise or counterclockwise relative to the booster handle structure 315. In addition, a sum of a length of the hooking member 316 and a length of the guide rail structure 3151a in the direction in which the two ends of the booster handle structure 315 are arranged is less than a length of the fifth protrusion structure 325a of the liquid cooling connector 320. That is, the sum of the length of the hooking member 316 and the length of the guide rail structure 3151a in the y direction shown in the figure is less than the length of the fifth protrusion structure 325a of the liquid cooling connector 320. In this way, when the fifth protrusion structure 325a of the liquid cooling connector 320 reaches the bottom of the guide rail structure 3151a, the bending portion 316a of the hooking member 316 may hook the fifth protrusion structure 325a of the liquid cooling connector 320, to avoid movement of a relative position between the liquid cooling charging connector 310 and the liquid cooling connector 320.

Specifically, in a process in which the liquid cooling charging connector 310 moves toward the liquid cooling connector 320, the two fifth protrusion structures 325a and 325b of the liquid cooling connector 320 may slide along corresponding guide rail structures respectively. When the fifth protrusion structures 325a and 325b are in contact with bending portions 316a of the hooking member 316, a contact surface applies a torque around the rotating shaft 3161 in a clockwise direction to the hooking member 316, so that the hooking member 316 can rotate in the clockwise direction. In this way, the two fifth protrusion structures 325a and 325b may slide along the corresponding guide rail structures. When the plug of the liquid cooling charging connector 310 is connected to the corresponding socket of the liquid cooling connector 320, the two fifth protrusion structures 325a and 325b reach the bottoms of the guide rail structure 3151a and the guide rail structure 3152a respectively. After the fifth protrusion structures 325a and 325b reach the bottoms of the corresponding guide rail structures respectively, the clockwise torque applied to the bending portion 316a of the hooking member 316 disappears, and the hooking member 316 returns to an original position under an action of gravity, namely, a position shown in FIG. 22. The sum of the length of the hooking member 316 and the length of the guide rail structure 3151a in the y direction is less than the length of the fifth protrusion structure 325a of the liquid cooling connector 320, and it is equivalent to that the fifth protrusion structure 325a is hooked by the hooking member 316 and the hooking member 316 locks the fifth protrusion structure 325a at the bottom of the guide rail structure 3151a. Therefore, the relative position between the liquid cooling charging connector 310 and the liquid cooling connector 320 in the x direction is fastened. In this case, even if the user accidentally touches the liquid cooling charging connector 310, the liquid cooling charging connector 310 does not displace relative to the liquid cooling connector 320 in the x direction, so that movement of the relative position between the liquid cooling charging connector 310 and the liquid cooling connector 320 caused by accidentally touching the liquid cooling charging connector 310 by the user can be avoided. This can ensure smooth transmission of the coolant, and can further ensure normal high-power charging of the electric vehicle.

When the liquid cooling charging connector 310 needs to be removed from the liquid cooling connector 320, the user may move the bending portion 316a of the hooking member 316 upward. In actual application, the user may touch the other end free of the bending portion 316a of the hooking member 316, and move the other end downward, so that one end with the bending portion 316a of the hooking member 316 is lifted upward. In this way, the hooking member 316 cannot hook the fifth protrusion structure 325a, and it is equivalent to unlocking the fifth protrusion structure 325a and the guide rail structure 3151a. In this way, the liquid cooling charging connector 310 can be smoothly removed from the liquid cooling connector 320.

Particularly, a spring mechanism may be disposed on a part that is of the hooking member 316 and that is in contact with the rotating shaft 3161, to increase locking force. Especially when the clockwise torque applied to the bending portion 316a of the hooking member 316 disappears, and the hooking member 316 returns to the original position under the action of gravity, the spring mechanism may increase the locking force between the part that is of the hooking member 316 and that is in contact with the rotating shaft 3161 and the rotating shaft 3161, to help the hooking member 316 lock the fifth protrusion structure 325a at the bottom of the guide rail structure 3151a, and further avoid the movement of the relative position between the liquid cooling charging connector 310 and the liquid cooling connector 320 caused by accidentally touching the liquid cooling charging connector 310 by the user. In addition, in a process of removing the liquid cooling charging connector 310, when the user touches the other end free of the bending portion 316a of the hooking member 316 to move the other end downward, the spring mechanism may increase the locking force between the part that is of the hooking member 316 and that is in contact with the rotating shaft 3161 and the rotating shaft 3161, to facilitate smooth removal of the liquid cooling charging connector 310.

To prevent the liquid cooling charging connector 310 from being removed in the charging process, corresponding structures may be disposed for the liquid cooling charging connector 310 and the liquid cooling connector 320, as shown in FIG. 23.

In an embodiment, as shown in FIG. 23, a second protrusion structure 317 is included on an end face that is of the one end 3151 in the two ends of the booster handle structure 315 and that is away from the housing 311. That is, the second protrusion structure 317 protrudes from the booster handle structure 315 in the y direction. As the booster handle structure 315 rotates, the second protrusion structure 317 also rotates.

In addition, the second protrusion structure 317 includes a through hole 317a. The through hole 317a penetrates the second protrusion structure 317 in a direction perpendicular to a protrusion direction of the second protrusion structure 317. In other words, the through hole 317a penetrates the second protrusion structure 317 in the x direction or the z direction. Specifically, when the booster handle structure 315 rotates relative to the housing 311 until an opening of the through hole 317a faces the x direction, the through hole 317a penetrates the second protrusion structure 317 in the x direction in this case. When the booster handle structure 315 rotates relative to the housing 311 until an opening of the through hole 317a faces the z direction, the through hole 317a penetrates the second protrusion structure 317 in the z direction in this case.

In an embodiment, as shown in FIG. 23, the liquid cooling connector 320 further includes a column structure 326. The column structure 326 is located on a side that is of the bottom plate 3211 and that is away from the fourth protrusion structure 325. In other words, the column structure 326 and the fourth protrusion structure 325 are located on different sides of the bottom plate 3211.

In addition, the bottom plate 3211 further includes a through hole 327. A projection of the column structure 326 overlaps a projection of the through hole 327 in an extension direction of the through hole 327. In other words, the projection of the column structure 326 overlap the projection of the through hole 327 in the x direction. In addition, the column structure 326 is further connected to a driving member 3261. The driving member 3261 is configured to drive the column structure 326 to move in the extension direction of the through hole 327, so that the column structure 326 penetrates the through hole 327.

In this embodiment of this application, in the process in which the liquid cooling charging connector 310 moves toward the liquid cooling connector 320, the two fifth protrusion structures 325a and 325b of the liquid cooling connector 320 slide along the corresponding guide rail structures respectively until the two fifth protrusion structures reach the bottoms of the corresponding guide rail structures. In addition, the fifth protrusion structure 325a is hooked by the hooking member 316, so that the relative position between the liquid cooling charging connector 310 and the liquid cooling connector 320 is fastened in the x direction. Further, the driving member 3261 drives the column structure 326 to move in the extension direction of the through hole 327, so that the column structure 326 penetrates the through hole 327, and then penetrates the through hole 317a of the liquid cooling charging connector 310, to lock the connection between the liquid cooling charging connector 310 and the liquid cooling connector 320. This can avoid a charging exception caused by accidental removal of the liquid cooling charging connector 310 in the charging process, and ensure normal charging of the electric vehicle.

A reason is as follows: If the column structure 326 and the through hole 317a are not designed, in the process in which the charging pile charges the electric vehicle, a user who does not use the electric vehicle can easily remove the liquid cooling charging connector 310 from the liquid cooling connector 320 by rotating the booster handle structure 315, and consequently the coolant cannot be transmitted to the electric vehicle. This is not conducive to normal high-power charging of the electric vehicle. In this embodiment of this application, the charging pile starts to charge the electric vehicle only when the liquid cooling device and the electric vehicle determine that each plug is successfully connected to the corresponding socket. When the charging pile starts to charge the electric vehicle, the driving member 3261 can drive the column structure 326 to move in the extension direction of the through hole 327, so that the column structure 326 penetrates the through hole 327 and the through hole 317a of the liquid cooling charging connector 310, to lock the connection between the liquid cooling charging connector 310 and the liquid cooling connector 320. When the liquid cooling charging connector 310 needs to be removed from the liquid cooling connector 320, the user needs to rotate the booster handle structure 315. However, because the column structure 326 penetrates the through hole 317a of the liquid cooling charging connector 310 at this moment, it is difficult for the user to rotate the booster handle structure 315. This can avoid the charging exception caused by accidental removal of the liquid cooling charging connector 310 in the charging process, and ensure normal charging of the electric vehicle.

It should be noted that, in the process of charging the electric vehicle, if the booster handle structure 315 is forcibly rotated, the column structure 326 and the through hole 317a are easily damaged, and the liquid cooling connector 320 and the liquid cooling charging connector 310 are damaged. As a result, normal charging of the electric vehicle is affected. Therefore, a process in which the liquid cooling charging connector 310 is normally removed from the liquid cooling connector 320 is as follows: When charging of the electric vehicle is completed, the charging pile may send a charging completion instruction to the electric vehicle, and in response to the electric vehicle receiving the charging completion instruction from the charging pile, the driving member 3261 drives the column structure 326 to move in the extension direction of the through hole 327, so that the column structure 326 returns to the liquid cooling connector 320. Further, the user can control the bending portion 316a of the hooking member 316 to move upward, and rotate the booster handle structure, so that the two fifth protrusion structures 325a and 325b exit from the guide rail structure 3151a and the guide rail structure 3152a respectively, to safely remove the liquid cooling charging connector 310 from the liquid cooling connector 320.

It should be understood that, for ease of distinguishing between the through hole 327 and the column structure 326, the through hole 327 and the column structure 326 are shown in the figure. In an actual scenario, when the liquid cooling connector 320 is not connected to the liquid cooling charging connector 310, the column structure 326 is located in the through hole 327. In other words, the projection of the column structure 326 overlaps the through hole 327 in the y direction.

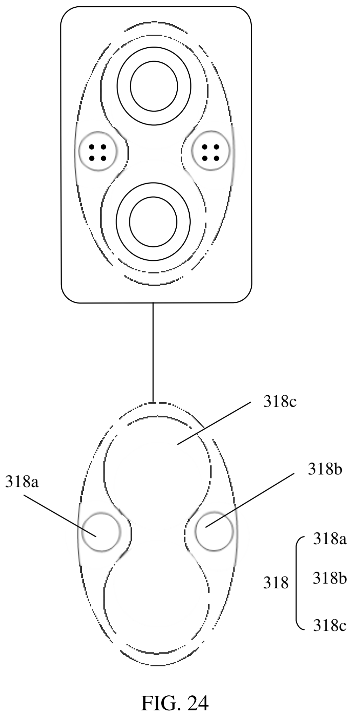

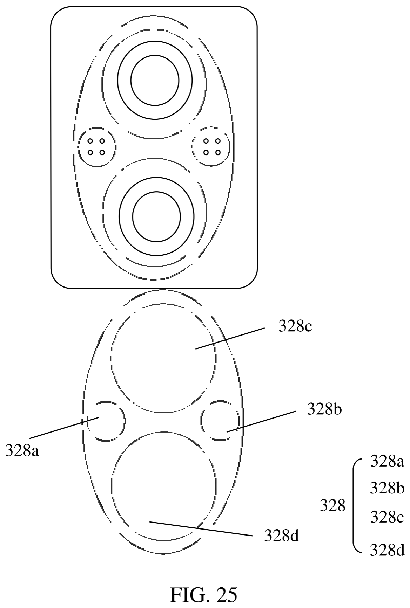

To better protect the liquid cooling charging connector 310 and the liquid cooling connector 320, as shown in FIG. 24, in an embodiment, the liquid cooling charging connector 310 further includes a dustproof cover 318, and the dustproof cover 318 is configured to cover the port of the liquid cooling charging connector 310. As shown in FIG. 25, in an embodiment, the liquid cooling connector 320 further includes a dustproof cover 328, and the dustproof cover 328 is configured to cover the port of the liquid cooling connector 320.

In this embodiment of this application, when the liquid cooling charging connector 310 is not plugged into the liquid cooling connector 320, the user may cover the port of the liquid cooling charging connector 310 with the dustproof cover 318, to prevent dust, rain, and the like from entering the liquid cooling charging connector 310, and protect the liquid cooling charging connector 310. Similarly, when the liquid cooling charging connector 310 is not plugged into the liquid cooling connector 320, the user may cover the port of the liquid cooling connector 320 with the dustproof cover 328, to prevent dust, rain, and the like from entering the liquid cooling connector 320, and protect the liquid cooling connector 320.

In addition, the dustproof cover shown in FIG. 24 further includes a plurality of small protection covers, for example, protection covers 318a, 318b, and 318c shown in the figure. The protection covers 318a and 318b are configured to cover ports of accommodation cavities in which the electric plugs 313 are located, to further protect the electric plugs 313. The protection cover 318c is configured to cover a port of an accommodation cavity in which the liquid cooling plug 312 is located, to further protect the liquid cooling plug 312.

The dustproof cover shown in FIG. 25 further includes a plurality of small protection covers, for example, protection covers 328a, 328b, 328c, and 328d shown in the figure. The protection covers 328a and 328b are configured to cover ports of accommodation cavities in which the electric sockets 323 are located, to further protect the electric sockets 323. The protection cover 328c is configured to cover a port of an accommodation cavity in which the liquid inlet socket 322a is located, to further protect the liquid inlet socket 322a. The protection cover 328d is configured to cover a port of an accommodation cavity in which the liquid outlet socket 322b is located, to further protect the liquid outlet socket 322b.

It should be understood that the liquid cooling charging connector 310 and the dustproof cover 318 may be connected to each other in a plurality of manners, for example, connected through a chain or a hinge. The liquid cooling connector 320 and the dustproof cover 328 may be connected to each other in a plurality of manners, for example, connected through a chain or a hinge. In FIG. 24, the liquid cooling charging connector 310 is connected to the dustproof cover 318 through a chain, and in FIG. 25, the liquid cooling connector 320 is connected to the dustproof cover 328 through a hinge.

In addition, this application further provides a liquid cooling device. The liquid cooling device includes a liquid cooling unit and the liquid cooling charging connector 310 in any one of the foregoing embodiments. The liquid cooling unit includes coolant, and the liquid cooling charging connector is configured to transmit the coolant of the liquid cooling unit to an electric vehicle.

This application provides an electric vehicle. The electric vehicle includes a power battery and the liquid cooling connector 320 in any one of the foregoing embodiments. The liquid cooling connector 320 is configured to transmit coolant from a liquid cooling device to the power battery.

In this embodiment of this application, when the electric vehicle is charged at high power, a liquid cooling unit may transmit the coolant to the power battery of the electric vehicle through the liquid cooling charging connector 310 and the liquid cooling connector 320. The coolant can take away heat generated in a charging process of the power battery, to reduce a temperature of the power battery, and ensure normal high-power charging of the power battery.

For specific descriptions of the liquid cooling charging connector 310 and the liquid cooling connector 320, refer to the foregoing related content. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A liquid cooling charging connector, wherein the liquid cooling charging connector is configured to connect to an electric vehicle, the liquid cooling charging connector comprises a housing, a liquid cooling plug, and an electric plug, the housing comprises a bottom plate, the bottom plate comprises a plurality of jacks, and both the liquid cooling plug and the electric plug pass through the bottom plate through different jacks;
the liquid cooling plug comprises a liquid supply plug and a liquid return plug, the liquid supply plug is configured to transmit coolant of a liquid cooling unit to the electric vehicle, and the liquid return plug is configured to transmit, to the liquid cooling unit, the coolant output by the electric vehicle;
the electric plug comprises a connection confirm plug, the connection confirm plug is configured to connect to a connection confirm socket of the electric vehicle, the connection confirm plug is further configured to connect to a connection confirm circuit, and a voltage at a detection point in the connection confirm circuit indicates a state of a connection between the liquid cooling charging connector and the electric vehicle; and
the bottom plate comprises a plurality of spaced accommodation cavities, and the liquid cooling plug and the electric plug are located in different accommodation cavities.

2. The liquid cooling charging connector according to claim 1, wherein a projection of the liquid cooling plug does not overlap a projection of the electric plug in a gravity direction.

3. The liquid cooling charging connector according to claim 1, wherein a distance between one end of the liquid cooling plug and the bottom plate is greater than a distance between one end of the connection confirm plug and the bottom plate; or
a distance between one end of the liquid cooling plug and an end face that is of the accommodation cavity and that is away from the bottom plate is less than a distance between one end of the connection confirm plug and an end face that is of the accommodation cavity and that is away from the bottom plate, wherein
both the one end of the liquid cooling plug and the one end of the connection confirm plug are exposed outside the housing.

4. The liquid cooling charging connector according to claim 3, wherein the connection confirm plug comprises a first connection confirm plug and a second connection confirm plug; and
a distance between one end of the first connection confirm plug and the bottom plate is less than a distance between one end of the second connection confirm plug and the bottom plate; or
a distance between one end of the first connection confirm plug and the end face that is of the accommodation cavity and that is away from the bottom plate is greater than a distance between one end of the second connection confirm plug and the end face that is of the accommodation cavity and that is away from the bottom plate.

5. The liquid cooling charging connector according to claim 4, wherein the electric plug further comprises a communication plug, and the communication plug is configured to connect to a communication socket of the electric vehicle; and
a distance between one end of the communication plug and the bottom plate is greater than the distance between the one end of the first connection confirm plug and the bottom plate, and the distance between the one end of the communication plug and the bottom plate is less than the distance between the one end of the second connection confirm plug and the bottom plate; or
a distance between one end of the communication plug and the end face that is of the accommodation cavity and that is away from the bottom plate is less than the distance between the one end of the first connection confirm plug and the end face that is of the accommodation cavity and that is away from the bottom plate, and the distance between the one end of the communication plug and the end face that is of the accommodation cavity and that is away from the bottom plate is greater than the distance between the one end of the second connection confirm plug and the end face that is of the accommodation cavity and that is away from the bottom plate, wherein
the one end of the communication plug is exposed outside the housing.

6. The liquid cooling charging connector according to any one of claims 3 to 5, wherein the electric plug further comprises a ground plug, and the ground plug is configured to connect to a ground socket of the electric vehicle; and
a distance between one end of the ground plug and the bottom plate is less than the distance between the one end of the liquid cooling plug and the bottom plate, and the distance between the one end of the ground plug and the bottom plate is greater than the distance between the one end of the connection confirm plug and the bottom plate; or
a distance between one end of the ground plug and the end face that is of the accommodation cavity and that is away from the bottom plate is greater than the distance between the one end of the liquid cooling plug and the end face that is of the accommodation cavity and that is away from the bottom plate, and the distance between the one end of the ground plug and the end face that is of the accommodation cavity and that is away from the bottom plate is less than the distance between the one end of the connection confirm plug and the end face that is of the accommodation cavity and that is away from the bottom plate, wherein
the one end of the ground plug is exposed outside the housing.

7. A liquid cooling connector, wherein the liquid cooling connector is configured to connect to a liquid cooling charging connector, the liquid cooling connector comprises a housing, a liquid cooling socket, and an electric socket, the housing comprises a bottom plate, the bottom plate comprises a plurality of jacks, and the liquid cooling socket and the electric socket pass through the bottom plate through different jacks;
the liquid cooling socket comprises a liquid inlet socket and a liquid outlet socket, the liquid inlet socket is configured to transmit, to a to-be-cooled component of an electric vehicle, coolant output by the liquid cooling charging connector, and the liquid outlet socket is configured to transmit, to the liquid cooling charging connector, the coolant that passes through the to-be-cooled component;
the electric socket comprises a connection confirm socket, the connection confirm socket is configured to connect to a connection confirm plug of the liquid cooling charging connector, the connection confirm socket is further configured to connect to a connection confirm circuit, and a voltage at a detection point in the connection confirm circuit indicates a state of a connection between the electric vehicle and the liquid cooling charging connector; and
the bottom plate comprises a plurality of spaced accommodation cavities, and the liquid cooling socket and the electric socket are located in different accommodation cavities.

8. The liquid cooling connector according to claim 7, wherein a projection of the liquid cooling socket does not overlap a projection of the electric socket in a gravity direction.

9. The liquid cooling connector according to claim 8, wherein a distance between one end of the liquid cooling socket and the bottom plate is greater than a distance between one end of the connection confirm socket and the bottom plate; or
a distance between one end of the liquid cooling socket and an end face that is of the accommodation cavity and that is away from the bottom plate is less than a distance between one end of the connection confirm socket and an end face that is of the accommodation cavity and that is away from the bottom plate, wherein
both the one end of the liquid cooling socket and the one end of the connection confirm socket are exposed outside the housing.

10. The liquid cooling connector according to claim 9 wherein the connection confirm socket comprises a first connection confirm socket and a second connection confirm socket; and
a distance between one end of the first connection confirm socket and the bottom plate is less than a distance between one end of the second connection confirm socket and the bottom plate; or
a distance between one end of the first connection confirm socket and the end face that is of the accommodation cavity and that is away from the bottom plate is greater than a distance between one end of the second connection confirm socket and the end face that is of the accommodation cavity and that is away from the bottom plate.

11. The liquid cooling connector according to claim 10, wherein the electric socket further comprises a communication socket, and the communication socket is configured to connect to a communication plug of the liquid cooling charging connector; and
a distance between one end of the communication socket and the bottom plate is equal to the distance between the one end of the first connection confirm socket and the bottom plate; or
a distance between one end of the communication socket and the end face that is of the accommodation cavity and that is away from the bottom plate is equal to the distance between the one end of the first connection confirm socket and the end face that is of the accommodation cavity and that is away from the bottom plate, wherein
the one end of the communication socket is exposed outside the housing.

12. The liquid cooling connector according to any one of claims 7 to 11, wherein the electric socket further comprises a ground socket, and the ground socket is configured to connect to a ground plug of the liquid cooling charging connector; and
a distance between one end of the ground socket and the bottom plate is less than the distance between the one end of the liquid cooling socket and the bottom plate, and the distance between the one end of the ground socket and the bottom plate is greater than the distance between the one end of the connection confirm socket and the bottom plate; or
a distance between one end of the ground socket and the end face that is of the accommodation cavity and that is away from the bottom plate is greater than the distance between the one end of the liquid cooling socket and the end face that is of the accommodation cavity and that is away from the bottom plate, and the distance between the one end of the ground socket and the end face that is of the accommodation cavity and that is away from the bottom plate is less than the distance between the one end of the connection confirm socket and the end face that is of the accommodation cavity and that is away from the bottom plate, wherein
the one end of the ground socket is exposed outside the housing.

13. The liquid cooling connector according to any one of claims 7 to 11, wherein the liquid cooling connector further comprises a guide post, the guide post and the accommodation cavity are located on a same side of the bottom plate, and the guide post is configured to plug into a guide hole of the liquid cooling charging connector; and
a distance between one end that is of the guide post and that is away from the bottom plate and the bottom plate is greater than the distance between the one end of the liquid cooling socket and the bottom plate, wherein the one end of the liquid cooling socket is exposed outside the housing.

14. A liquid cooling device, wherein the liquid cooling device comprises a liquid cooling unit and the liquid cooling charging connector according to any one of claims 1 to 6, the liquid cooling unit comprises the coolant, and the liquid cooling charging connector is configured to transmit the coolant of the liquid cooling unit to an electric vehicle.

15. An electric vehicle, wherein the electric vehicle comprises a power battery and the liquid cooling connector according to any one of claims 7 to 13, and the liquid cooling connector is configured to transmit coolant from a liquid cooling device to the power battery.
